# EUROPEAN PATENT SPECIFICATION

(11) **EP 1 586 605 B1**
(45) Date of publication and mention of the grant of the patent: **02.11.2011**
(21) Application number: 04703243.8
(22) Date of filing: 19.01.2004
(51) Int. Cl.: C08L 33/12, C08F 220/14, C09K 3/10, C09J 157/06

(54) **POLYMER AND CURABLE COMPOSITIONS IMPROVED IN STORAGE STABILITY**
POLYMER UND HÄRTBARE ZUSAMMENSETZUNGEN MIT VERBESSERTER LAGERSTABILITÄT
POLYMERE ET COMPOSITIONS DURCISSABLES A STABILITE DE STOCKAGE AMELIOREE

(30) Priority: 22.01.2003 JP 2003013077; 22.01.2003 JP 2003013076
(43) Date of publication of application: 19.10.2005
(73) Proprietor: KANEKA CORPORATION, Osaka-shi, Osaka 530-8288 (JP)
(72) Inventor: NAKAGAWA, Yoshiki, Settsu-shi, Osaka 5660072 (JP); HASEGAWA, Nobuhiro, Settsu-shi, Osaka 5660072 (JP); SHIMIZU, Yasuo c/o Takasago Plant, Takasago-shi, Hyogo 6768688 (JP); OKAI, Jiro, Settsu-shi, Osaka 5660072 (JP); FUJITA, Nao, Settsu-shi, Osaka 5660072 (JP); TAMAI, Hitoshi c/o Takasago Plant, Takasago-shi, Hyogo 6768688 (JP); YANO, Ayako c/o Takasago Plant, Takasago-shi, Hyogo 6768688 (JP)
(74) Representative: Hubert, Philippe
(86) International application number: PCT/JP2004/000356
(87) International publication number: WO 2004/069923

(56) References cited:
- EP-A- 1 000 979
- EP-A1- 0 976 766
- EP-A1- 1 000 979
- JP-A- 5 239 178
- JP-A- 5 271 607
- JP-A- 9 143 329
- JP-A- 10 120 724
- JP-A- 2002 275 408
- PATENT ABSTRACTS OF JAPAN vol. 013, no. 589 (C-670), 25 December 1989 (1989-12-25) & JP 01 247403 A (NIPPON SHOKUBAI KAGAKU KOGYO CO LTD), 3 October 1989 (1989-10-03)
- PATENT ABSTRACTS OF JAPAN vol. 018, no. 019 (C-1152), 13 January 1994 (1994-01-13) & JP 05 255415 A (TAKEDA CHEM IND LTD), 5 October 1993 (1993-10-05)
- PATENT ABSTRACTS OF JAPAN vol. 018, no. 032 (C-1154), 18 January 1994 (1994-01-18) & JP 05 262808 A (NIPPON SHOKUBAI CO LTD), 12 October 1993 (1993-10-12)

## Description

### Technical Field

The present invention relates to a curable composition, which can be applied, for example, to a sealant, a gasket, or an adhesive, and a polymer having a crosslinkable functional group.

In addition, the present invention also relates to: a curable composition containing a vinyl polymer as an essential component, which has a crosslinkable silyl group at the terminus and has a specific monomer as a constituent unit; use of this polymer; a polymer containing a crosslinkable functional group at the terminus and having a specific monomer at a specific amount; and a curable composition, containing, as essential components, compound, which contains a vinyl polymer having a crosslinkable silyl group at the terminus and a compound which contains a methyl ester group.

### Background Art

As curable compositions having a functional group at the terminus, moisture curing liquid polymers having a crosslinkable silyl group at the terminus thereof, the main chain of which is polysiloxane, polyoxypropylene, or polyisobutylene, have already been known. However, these curable compositions have problems to be improved. A polysiloxane composition is excellent in terms of weather resistance, heat resistance, cold resistance, flexibility, or the like, but is problematic in terms of staining properties caused by bleeding of low molecular weight components and coating properties. A polyoxypropylene composition is excellent in terms of flexibility, coating properties, and contamination resistance, but it is insufficient in terms of weather resistance in some cases. A polyisobutylene composition is good in terms of weather resistance and moisture permeation resistance. However, since it has a relatively high viscosity, it may be difficult to handle it in some cases. In addition, such a polyisobutylene composition requires some devices for processing into one component.

Polymers having an alkenyl group at the terminus are also used as curable compositions. It has been known that a cured product having excellent heat resistance, durability, and deep-curing properties can be obtained using a compound having a hydrosilyl group as a curing agent. As a main chain skeleton of such a polymer having an alkenyl group at the terminus, various skeletons have been known. Examples of such a skeleton may include: polyether polymers such as polyethylene oxide, polypropylene oxide, or polytetramethylene oxide; hydrocarbon polymers such as polybutadiene, polyisoprene, polychloroprene, poyisobutylene, or their hydrogenated products; polyester polymers such as polyethylene terephthalate, polybutylene terephthalate, or polycaprolactone; and silicon polymers such as polydimethylsiloxane.

Curable compositions using these polymers even have problems to be improved. For example, polyether cured products may be insufficient in terms of heat resistance or weather resistance, depending on purposes. Due to internal double bonds remaining in the main chain, hydrocarbon cured products such as polybutadiene or polyisoprene may be somewhat insufficient in terms of heat resistance or weather resistance, depending on purposes. Polyisobutylene cured products having no internal double bonds are excellent in terms of weather resistance, but these products have relatively high viscosity and thus it may be difficult to handle them in some cases. Polyester cured products may also be insufficient in terms of weather resistance, depending on purposes. Silicon cured products are superior in terms of weather resistance, heat resistance,cold resistance,and workability. However, these products are still problematic in terms of coating properties and staining properties.

Conventionally, acrylic rubber polymers, into which an active chlorine group or an epoxy group had been introduced, have been used for acrylic rubber compositions, which are used for molding, and thus, molded products having good heat resistance and oil resistance have been obtained. In order to respond to the need for achieving further improved heat resistance, a technique of introducing a vinyl group-containing organic silicon group has been proposed (refer to Japanese Patent Laid-Open No. 61-127711 and Japanese Patent Publication No. 2-1859). However, since a silicon group is not introduced into the terminus by such a technique, the obtained cured product is insufficient in terms of physical properties of rubber, such as elongation.

In order to solve such a problem, a (meth) acrylic polymer having a functional group at the terminus has been developed. In particular, a polymer synthesized using living radical polymerization is able to arbitrarily control molecular weight or molecular weight distribution. It also makes possible quantitative introduction of a functional group into the terminus. Consequently, this polymer can be used for a curable composition that is excellent in terms of weather resistance, heat resistance, oil resistance, or the like, having good mechanical properties.

The polymers described in Patent Document 1 are several examples of a vinyl polymer having a crosslinkable silyl group at the terminus. However, these publications do not refer to the curable composition of the present invention, which comprises a vinyl polymer having a crosslinkable silyl group at the terminus and having, as an essential component, a monomer having a methyl ester group. In addition, the publications do not describe possible solutions to improve delay in curing after the storage.

The polymers described in Patent Publication 2 are several examples of a (meth) acrylic polymer using methyl acrylate or methyl methacrylate as a monomer and having a functional group at the terminus. However, in these examples, the terminus is limited to a hydroxyl group, or the amount of methyl acrylate or methyl methacrylate used is not a suitable amount, which is described in the present invention.

Patent Document 3 describes an example of the invention relating to a technique of suppressing delay in curing of a curable composition comprising a polymer having a hydrolyzable silyl group-terminated functional group, which is similar to the present invention. However, the main chain of a polymer is polyether in this patent, and thus, constituent elements are completely different between the two inventions.

Moreover, Patent Document 4 describes several examples of a curable composition having, as an essential component, a vinyl polymer having a crosslinkable silyl group at the terminus. However, these publications do not refer to the use of a compound having a methyl ester group as an essential constituent unit, which is described in the present invention. Furthermore, the publications do not describe possible solutions to improve delay in curing after the storage.
[Patent Document 1]
   Japanese Patent Laid-Open Nos. 11-201107, 11-80571, 11-116763, 2000-38404, 2000-44626, 2000-72815, and 2000-72816
[Patent Document 2]
   Japanese Patent Laid-Open Nos. 9-272714 (pp. 16 to 21), 9-272715 (pp. 9 to 10), 11-80250 (pp. 16 to 20), 11-5815 (pp. 18 to 19), 11-80570 (pp. 13 to 17), and 11-116617 (pp. 16 to 29)
[Patent Document 3]
   Japanese Patent Laid-Open No. 5-339490
[Patent Document 4]
   Japanese Patent Laid-Open Nos.9-272714, 9-272715, 11-043512, 11-80249, 11-80250, 11-5815, 11-80571, 11-100433, 11-116763, 11-130931, 11-116617, 2000-44626, 2000-128924, 2000-191728, 12-86998,12-86999,12-143853,12-191912, 2000-186126, 2000-119527, 2000-154205, 2000-129199, 2000-178456, 2001-11319, 2001-271055, 2001-329065, 2001-303023, 2001-329025, and 2001-279108

In addition, EP 976 766 describes methods of synthesis of alkenyl-terminated or crosslinkable silyl group-terminated vinyl polymers. EP 1 000 979 discloses curable compositions said to be excellent in weathering and heat resistance and having low viscosity, using vinyl polymers having crosslinkable silyl groups.

A condensation curable composition having a crosslinkable silyl group is often problematic in that a curing rate is decreased due to degradation during the storage, so that the application thereof becomes difficult (that is, a problem regarding delay in curing). In particular, in the case of having a (meth)acrylic polymer as a component, such a problem tends to appear significantly. In addition, as described above, a vinyl polymer having a crosslinkable functional group at the terminus provides a curable composition having good mechanical properties, but a polymer capable of providing a cured product with higher strength or elongation is still required.

It is an object of the present invention to provide a curable composition having a crosslinkable silyl group at the terminus, regarding which the curing properties after the storage and/or the mechanical properties of a cured product obtained after curing are improved.

It is another object of the present invention to provide a polymer having a crosslinkable functional group at the terminus, which is able to provide a curable composition, regarding which the curing properties after the storage and/or the mechanical properties of a cured product obtained after curing are improved.

### Disclosure of the Invention

As a result of intensive studies, the present inventors have found that the aforementioned objects can be achieved using a polymer having a methyl ester group, thereby completed the following invention.

In one aspect, the present invention relates to a curable composition comprising an aminosilane and, as an essential component, (I) a vinyl polymer, which has at least one crosslinkable silyl group at the terminus and a monomer containing a methyl ester group as an essential constituent unit, the crosslinkable silyl group represented by general formula (1):

- Si (R¹)_{2-b}(Y)_{b}O]ₘ-Si (R²)₃₋ₐ (Y)ₐ (1)

wherein each of R¹ and R² represents an alkyl group containing 1 to 20 carbon atoms, an aryl group containing 6 to 20 carbon atoms, an aralkyl group containing 7 to 20 carbon atoms, or a triorganosiloxy group represented by (R')₃SiO-, wherein R' represents a monovalent hydrocarbon group containing 1 to 20 carbon atoms, and three R's may be identical to or different from one another, and when two or more R¹s or R²s exist, these may be identical to or different from one another; Y represents a hydroxyl group or a hydrolyzable group, and when two or more Ys exist, these may be identical to or different from one another; and a represents 0, 1, 2, or 3, b represents 0, 1, or 2, and m represents an integer between 0 and 19, which satisfies a + mb ≥ 1.

The vinyl polymer (I) is preferably a (meth) acrylic polymer. The term " (meth) acrylic polymer" is used to mean a polymer, 30% or more by weight of the constituent unit of which is a (meth) acrylic monomer. The monomer containing a methyl ester group which constitutes the vinyl polymer (I) is preferably methyl acrylate or methyl methacrylate, and more preferably methyl acrylate.

The vinyl polymer (I) is preferably in a liquid state at 23°C.

The vinyl polymer (I) is preferably synthesized by living radical polymerization, and more preferably synthesized by atom transfer radical polymerization.

The ratio of weight average molecular weight to number average molecular weight of vinyl polymer (I) is preferably less than 1.8. In this case, the ratio is determined by gel permeation chromatography.

The curable composition in the present invention is preferably a one-component curable composition.

The curable composition in the present invention preferably comprises a condensation curing catalyst. In addition, the condensation curing catalyst is preferably a tin curing catalyst.

The curable composition in the present invention comprises an aminosilane as amine compound (III). In addition, an amino group contained in the amine compound is preferably a primary amine. Moreover, the amine compound is preferably a silane coupling agent.

In a preferred embodiment, the curable composition in the present invention comprises a polyether polymer having at least one crosslinkable silyl group represented by the general formula (1).

The present invention further relates to a sealant, a liquid gasket, and an adhesive, wherein the curable composition of the present invention is used.

In another aspect, the present invention relates to a curable composition with improved storage stability, which comprises an aminosilane and the following two components as essential components:
a vinyl polymer (I) having at least one crosslinkable silyl group represented by the above general formula (1); and
a compound (II) having a methyl ester group other than the compound (I).

In the present invention, the vinyl polymer (I) is preferably a (meth) acrylic polymer, and more preferably an acrylic ester polymer. The term "(meth)acrylic polymer" is used to mean a polymer, 30% or more by weight of the constituent unit of which is a (meth)acrylic monomer. Moreover, the crosslinkable silyl group represented by the general formula (1) is preferably located at the terminus of the vinyl polymer.

The vinyl polymer (I) is preferably in a liquid state at 23°C.

The vinyl polymer (I) is preferably synthesized by living radical polymerization, and more preferably synthesized by atom transfer radical polymerization.

The ratio of weight average molecular weight to number average molecular weight of vinyl polymer (I) is preferably less than 1.8. In this case, the ratio is determined by gel permeation chromatography.

The curable composition of the present invention is preferably a one-component curable composition.

In this aspect of the present invention, the carbon atom at the α-position of the methyl ester group contained in the compound (II) having a methyl group other than the compound (I) is preferably primary or secondary. In addition, the compound (II) having a methyl ester group other than the compound (I) is preferably a dimethyl ester of dicarboxylic acid.

In this aspect of the present invention, the compound (II) having a methyl ester group other than the compound (I) is preferably selected from the following group: dimethyl malonate, dimethyl succinate, dimethyl glutarate, dimethyl adipate, dimethyl sebacate, methyl acetate, methyl propionate, methyl butyrate, methyl valerate, methyl caprylate, methyl caprate, methyl laurate, methyl myristate,methylpalmitate,methylstearate,methyl oleate, methyl ricinoleate, and coconut fatty acid methyl ester.

In this aspect of the present invention, the compound (II) having a methyl ester group other than the compound (I) is preferably a polymer containing a monomer having a methyl ester group as a constituent unit.

In this aspect of the present invention, the monomer having a methyl ester group is preferably methyl acrylate.

In this aspect of the present invention, the compound having a methyl ester group is a copolymer containing a monomer having a methyl ester group as a constituent, and it is preferable that among ester groups contained in monomers other than the monomer having a methyl ester group, those having an alkoxy group that is primary and contains 5 or more carbon atoms make up 80% or less at a molar ratio with respect to the methyl ester groups.

In this aspect of the present invention, the compound having a methyl ester group is a copolymer containing a monomer having a methyl ester group as a constituent, and it is preferable that among ester groups contained in monomers other than the monomer having a methyl ester group, those having an alkoxy group that is primary and contains 2 to 4 carbon atoms make up 400% or less at a molar ratio with respect to the methyl ester groups.

The curable composition in the present invention preferably comprises a condensation curing catalyst as an essential component. In addition, the condensation curing catalyst is preferably a tin curing catalyst.

The curable composition in the fifth aspect of the present invention comprises an aminosilane as amine compound (III). In addition, an amino group contained in the amine compound is preferably a primary amine. Moreover, the amine compound is preferably a silane coupling agent.

In a preferred embodiment, the curable composition in this aspect of the present invention comprises a polyether polymer having at least one crosslinkable silyl group represented by the general formula (1).

The present invention further relates to a sealant, a liquid gasket, and an adhesive, wherein the curable composition in this aspect of the present invention is used.

### Best Mode for Carrying Out the Invention

In one aspect, the present invention relates to a curable composition comprising an aminosilane and, as an essential component, a vinyl polymer (I), which has at least one crosslinkable silyl group at the terminus and a monomer containing a methyl ester group as an essential constituent unit, the crosslinkable silyl group represented by the general formula (1):

- [Si (R¹)_{2-b}(Y)_{b}O]ₘ-Si (R²)₃₋ₐ(Y)ₐ (1)

wherein each of R¹ and R² represents an alkyl group containing 1 to 20 carbon atoms, an aryl group containing 6 to 20 carbon atoms, an aralkyl group containing 7 to 20 carbon atoms, or a triorganosiloxy group represented by (R')₃SiO-, wherein R' represents a monovalent hydrocarbon group containing 1 to 20 carbon atoms, and three R's may be identical to or different from one another, and when two or more R¹s or R²s exist, these may be identical to or different from one another; Y represents a hydroxyl group or a hydrolyzable group, and when two or more

Ys exist, these may be identical to or different from one another; and a represents 0, 1, 2, or 3, b represents 0, 1, or 2, and m represents an integer between 0 and 19, which satisfies a + mb ≥ 1.

### <Component (I)>

### Crosslinkable silyl group represented by general formula (1)

Examples of a hydrolyzable group may include commonly used groups such as a hydrogen atom, alkoxy group, acyloxy group, ketoximate group, amino group, amide group, aminooxy group, mercapto group, or alkenyloxy group. Of these, an alkoxy group, an amide group, and aminooxy group are preferable. In terms of mild hydrolysis properties and handlability, an alkoxy group is particularly preferable.

1 to 3 hydrolyzable groups or hydroxyl groups are able to bind to a single silicon atom. The total of a and all of b, a + mb, is preferably between 1 and 5. When two or more hydrolyzable groups or hydroxyl groups bind into a crosslinkable silyl group, such groups may be either identical to or different from one another. The number of silicon atoms forming a crosslinkable silyl group is at least one. In the case of silicon atoms bound via a siloxane bond or the like, the number is preferably 20 or less. In particular, a crosslinkable silyl group represented by the following general formula (2):

-Si(R³)₃₋ₐ(Y)ₐ (2)

wherein R³, Y, and a have the same meanings as described above, is preferable because it is easily obtained.

### Number of crosslinkable functional groups

The number of crosslinkable functional groups in a vinyl polymer is not particularly limited. In order to obtain a cured product having high crosslinking properties, the mean number of such crosslinkable functional groups is 1 or more, preferably 1.2 or more, and more preferably 1.5 or more, per molecule of the vinyl polymer.

### Position of crosslinkable functional groups

When a molded product formed by curing the curable composition of the present invention is particularly required to have the properties of rubber, at least one crosslinkable silyl group is preferably located at the terminus of a molecular chain because it involves a large molecular weight between the crosslinking points, which significantly affects rubber elasticity. More preferably, all crosslinkable functional groups are located at the terminus of a molecular chain.

### Monomer containing a methyl ester group

A monomer containing a methyl ester group is not particularly limited. Examples of such monomers may include methyl acrylate, methyl methacrylate, dimethyl maleate, and methyl ester-substituted styrene. In terms of easy polymerization and a high effect of suppressing delay in curing, methyl acrylate and methyl methacrylate are preferable, and methyl acrylate is particularly preferable.

The ratio of such a monomer having a methyl ester group to other monomers is not limited. In order to improve the storage stability of the curable composition of the present invention, it is preferable that many monomers having a methyl ester group be polymerized. In general, a polymer comprising monomers having a methyl ester group has a higher glass transition temperature than a polymer comprising monomers having other ester groups containingmanycarbonatoms. Thus, when a liquid resin is produced from such a polymer comprising monomers having a methyl ester group, the viscosity thereof may become high, or low-temperature properties may be deteriorated in some cases. It is therefore preferable that a right balance be maintained depending on properties of interest. Such a balance will be described later.

### Vinyl monomer constituting vinyl polymer

In terms of the physical properties of a product to be obtained or the like, a vinyl monomer constituting the main chain of a vinyl polymer preferably comprises, as main components, alkyl (meth)acrylate and/or alkoxyalkyl (meth)acrylate.

Examples of alkyl (meth)acrylate may include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, and stearyl (meth)acrylate. Of these, methyl acrylate, ethyl acrylate, butyl acrylate, isobutyl acrylate, and 2-ethylhexyl acrylate are preferable. Ethyl acrylate and butyl acrylate are particularly preferable.

Examples of alkoxyalkyl (meth)acrylate may include 2-methoxyethyl(meth)acrylate,2-ethoxyethyl (meth)acrylate, and 3-methoxybutyl (meth) acrylate. Of these, 2-methoxyethyl acrylate and 2-ethoxyethyl (meth)acrylate are particularly preferable.

In order to control physical properties, in addition to alkyl (meth)acrylate and alkoxyalkyl (meth)acrylate, the following vinyl monomers may also be copolymerized. Examples of a vinyl monomer capable of being copolymerized may include: (meth)acrylic monomers such as (meth)acrylic acid, phenyl (meth)acrylate,toluyl(meth)acrylate,benzyl(meth)acrylate, 2-hydroxyethyl (meth)acrylate, 2-hydroxypropyl (meth)acrylate, glycidyl (meth)acrylate, 2-aminoethyl (meth)acrylate,y-(methacryloyloxypropyl)trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, or 2-perfluorohexadecylethyl (meth)acrylate; styrene monomers such as styrene, vinyltoluene,α-methylstyrene, chlorstyrene, or styrene sulfonate and a salt thereof; fluorine-containing vinyl monomers such as perfluoroethylene, perfluoropropylene, or vinylidene fluoride; silicon-containing vinyl monomers such as vinyltrimethoxysilane or vinyltriethoxysilane; maleic anhydride, maleic acid, and a monoalkyl ester and a dialkyl ester of maleic acid; fumaric acid, and a monoalkyl ester and a dialkyl ester of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, or cyclohexylmaleimide;nitrile-containing vinyl monomers such as acrylonitrile or methacrylonitrile; amide group-containing vinyl monomers such as acrylamide or methacrylamide; vinyl esters such as vinyl acetate, vinyl propionate, vinyl pivalate, vinyl benzoate, or vinyl cinnamate; alkenes such as ethylene or propylene; conjugated dienes such as butadiene or isoprene; and vinyl chloride, vinylidene chloride, allyl chloride, and allyl alcohol.

Properties such as oil resistance, heat resistance, or cold resistance can be controlled by changing the composition ratio of alkyl (meth)acrylate and/or alkoxyalkyl (meth) acrylate, which are the main constituent units of a vinyl polymer.

For example, in order to obtain a cured product having a well balance of rubber elasticity, oil resistance, heat resistance, cold resistance, surface tackiness, and surface staining properties, a vinyl polymer preferably comprises alkyl acrylate at a weight ratio between 60% and 80% based on the total weight of vinyl monomers constituting the vinyl polymer and alkoxyalkyl acrylate at a weight ratio between 20% and 40% based on the total weight of vinyl monomers constituting the vinyl polymer. In this case, a vinyl polymer, which comprises ethyl acrylate at a weight ratio between 30% and 50% based on the total weight of vinyl monomers, butyl acrylate at a weight ratio between 20% and 40% based on the total weight of vinyl monomers, and 2-methoxyethyl acrylate at a weight ratio between 20% and 40% based on the total weight of vinyl monomers, is well balanced. A vinyl polymer, which comprises ethyl acrylate at a weight ratio between 50% and 80%, butyl acrylate at a weight ratio between 0% and 20%, and 2-methoxyethyl acrylate at a weight ratio between 20% and 40%, is more excellent in terms of oil resistance. In addition, a vinyl polymer, which comprises ethyl acrylate at a weight ratio between 0% and 30%, butyl acrylate at a weight ratio between 40% and 80%, and 2-methoxyethyl acrylate at a weight ratio between 20% and 40%, is more excellent in terms of cold resistance.

When oil resistance and cold resistance are particularly emphasized, a vinyl polymer preferably comprises alkyl acrylate at a weight ratio between 20% and 60% based on the total weight of vinyl monomers constituting the vinyl polymer, and alkoxyalkyl acrylate at a weight ratio between 40% and 80% based on the total weight of vinyl monomers constituting the vinyl polymer. In this case, when a vinyl polymer comprises ethyl acrylate and butyl acrylate whose total weight is at a weight ratio between 20% and 60% based on the total vinyl monomers constituting the vinyl polymer, and 2-methoxyethyl acrylate at a weight ratio between 40% and 80% based on the total vinyl monomers constituting the vinyl polymer, it is more excellent in terms of oil resistance and cold resistance. Thus, such a vinyl polymer is more preferable. When a vinyl polymer comprises ethyl acrylate at a weight ratio between 10% and 30% based on the total weight of vinyl monomers constituting the vinyl polymer, butyl acrylate at a weight ratio between 10% and 30% based on the total weight of vinyl monomers constituting the vinyl polymer, and 2-methoxyethyl acrylate at a weight ratio between 40% and 80% based on the total weight of vinyl monomers constituting the vinyl polymer, it is excellent in terms of oil resistance and cold resistance. When a vinyl polymer comprises ethyl acrylate at a weight ratio between 0% and 10% based on the total weight of vinyl monomers constituting the vinyl polymer, butyl acrylate at a weight ratio between 30% and 60% based on the total weight of vinyl monomers constituting the vinyl polymer, and 2-methoxyethyl acrylate at a weights ratio between 40% and 80% based on the total weight of vinyl monomers constituting the vinyl polymer, it is particularly excellent in terms of cold resistance. When a vinyl polymer comprises ethyl acrylate at a weight ratio between 30% and 60% based on the total weight of vinyl monomers constituting the vinyl polymer, butyl acrylate at a weight ratio between 0% and 10% based on the total weight of vinyl monomers constituting the vinyl polymer, and 2-methoxyethyl acrylate at a weight ratio between 40% and 80% based on the total weight of vinyl monomers constituting the vinyl polymer, it is excellent in terms of oil resistance and cold resistance.

When oil resistance and heat resistance are particularly emphasized, a vinyl polymer preferably comprises alkyl acrylate at a weight ratio between 80% and 100% based on the total weight of vinyl monomers constituting the vinyl polymer, and alkoxyalkyl acrylate at a weight ratio between 0% and 20% based on the total weight of vinyl monomers constituting the vinyl polymer. In this case, when a vinyl polymer comprises ethyl acrylate at a weight ratio between 40% and 60% based on the total weight of vinyl monomers constituting the vinyl polymer, butyl acrylate at a weight ratio between 40% and 60% based on the total weight of vinyl monomers constituting the vinyl polymer, and 2-methoxyethyl acrylate at a weight ratio between 1% and 20% based on the total vinyl monomers constituting the vinyl polymer, it is excellent in terms of rubber elasticity, as well as oil resistance and heat resistance. When a vinyl polymer comprises ethyl acrylate at a weight ratio between 60% and 100% based on the total weight of vinyl monomers constituting the vinyl polymer, butyl acrylate at a weight ratio between 0% and 40% based on the total weight of vinyl monomers constituting the vinyl polymer, and 2-methoxyethyl acrylate at a weight ratio between 0% and 20% based on the total weight of vinyl monomers constituting the vinyl polymer, it is excellent in terms of oil resistance, heat resistance, surface tackiness, and surface staining properties. When a vinyl polymer comprises ethyl acrylate at a weight ratio between 0% and 40% based on the total weight of vinyl monomers constituting the vinyl polymer, butyl acrylate at a weight ratio between 60% and 100% based on the total weight of vinyl monomers constituting the vinyl polymer, and 2-methoxyethyl acrylate at a weight ratio between 0% and 20% based on the total weight of vinyl monomers constituting the vinyl polymer, it is excellent in terms of oil resistance, heat resistance, and rubber elasticity.

### Molecular weight and molecular weight distribution of vinyl polymer

The molecular weight distribution of the aforementioned vinyl polymer, that is, the ratio of weight average molecular weight to number average molecular weight of vinyl polymer (I) is not particularly limited. In this case, the ratio is determined by gel permeation chromatography.

It is generally less than 1.8, preferably 1.7 or less, more preferably 1.6 or less, further more preferably 1.5 or less, particularly preferably 1.4 or less, and most preferably 1.3 or less. In the GPC measurement in the present invention, chloroform is generally used as a mobile phase, and the measurement is conducted with a polystyrene gel column. The number average molecular weight or the like can be calculated relative to polystyrene.
The number average molecular weight of the aforementioned vinyl polymer is not particularly limited. It is preferably within a range between 500 and 1, 000, 000, and more preferably between 1,000 and 100,000.

### Method for polymerizing vinyl polymer

A method for polymerizing a vinyl polymer is not limited in the present invention. Control radical polymerization is preferable, living radical polymerization is more preferable, and atom transfer radical polymerization is particularly preferable. These polymerization methods will be described below.

### (Control radical polymerization)

Radical polymerization method can be classified into two types: "general radical polymerization method, " which simply copolymerizes a monomer having a specific functional group and a vinyl monomer using an azo compound or peroxide as a polymerization initiator; and "control radical polymerization method," which enables introduction of a specific functional group into a specific site such as a terminus.

Such a "general radical polymerization method" is a simple methods. However, monomers having a specific functional group are introduced into a polymer only at a certain probability, in this method. Thus, this method is problematic in that when a polymer containing large quantities of a functional group is intended to be obtained, it is required to use such monomers at a considerably large amount. In contrast, when such monomers are used at a small amount, the ratio of polymers, into which such a specific functional group has not been introduced, increases. In addition, since this is free radical polymerization, it is also problematic in that only polymers having a wide molecular weight distribution and a high viscosity can be obtained.

The "control radical polymerization method" is further classified into the "chain transfer agent method," in which polymerization is carried out using a chain transfer agent having a specific functional group, so as to obtain a vinyl polymer having a functional group at the terminus, and the "living radical polymerization method," in which polymers having almost the desired molecular weight can be obtained, while a polymerization growth terminus does not cause a termination reaction or the like.

The "chain transfer agent method" enables the obtainment of polymers with high functionality. This method requires a considerably large amount of chain transfer agent having a specific functional group with respect to an initiator. Thus, this method is problematic in terms of economic aspect including treatment. In addition, as with the aforementioned "general radical polymerization method," since this is free radical polymerization, it is also problematic in that only polymers having a wide molecular weight distribution and a high viscosity can be obtained.

A radical polymerization process is difficult to control on account of the high polymerization, and termination reaction due to coupling of radicals easily occurs. Unlike these polymerization processes, by the living radical polymerization, a polymer with a narrow molecular weight distribution (Mw/Mn of about 1.1 to 1.5) can be obtained because termination reaction little occurs, and the molecular weight can be freely controlled by controlling the charge ratio of the monomer to the initiator.

Accordingly, the "living radical polymerization method" enables the obtainment of polymers with a narrow molecular weight distribution and a low viscosity. In addition, since monomers having a specific functional group can be introduced into almost any given sites of such polymers by this method, the "living radical polymerization method" is preferable as a method for producing the above described vinyl polymer having a specific functional group.

In the narrow sense, the term "living polymerization" means polymerization in which termini constantly maintain activity and a molecular chain grows. However, in general, the term "living polymerization" also include pseudo-living polymerization in which a molecular chain grows although inactivated termini and activated termini are present in an equilibrium state. The definition in the present invention is also the latter one.

In recent years, the "living radical polymerization method" has actively been studied by various study groups. Examples of such studies may include: the use of a cobalt-porphyrin complex, described in Journal of American Chemical Society (J.Am.Chem. Soc.), 1994, vol. 116, p. 7943; the use of a radical scavenger such as a nitroxide compound, described in Macromolecules, 1994, vol. 27, p. 7228; and "atom transfer radical polymerization" (ATRP) using an organic halide as an initiator and a transition metal complex as a catalyst.

Among such "living radical polymerization methods," the "atom transfer radical polymerization method," which polymerizes a vinyl monomer using an organic halide or halogenated sulfonyl compound as an initiator and a transition metal complex as a catalyst, does not only have the characteristics of the aforementioned "living radical polymerization method", but this method also involves halogens or the like that are relatively advantageous for a functional group-conversion reaction at the terminus and has a high degree of flexibility in designing such an initiator and a catalyst. Accordingly, the atom transfer radical polymerization method is more preferable as a method for producing a vinyl polymer having a specific functional group. This atom transfer radical polymerization method is described, for example, in Matyjaszewski et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/3042 WO97/18247 WO98/0148 WO98/40415; Sawamoto et al., Macromolecules, 1995, vol. 28, p. 1721; Japanese Patent Laid-Open No. 9-208616; and Japanese patent Laid-Open No. 8-41117.

In the present invention, it is not particularly limited, which of these living radical polymerization methods is applied. However, the atom transfer radical polymerization method is preferable.

Living radical polymerization will be described in detail below. However, before the description of the living radical polymerization, a control radical polymerization usable for the production of a vinyl polymer that will be described later, that is, a polymerization using a chain transfer agent, will be described. A radical polymerization using a chain transfer agent (telomer) is not particularly limited. In order to obtain a vinyl polymer having a terminal structure that is suitable for the present invention, there are the following two types of methods:

That is, a method for obtaining a polymer having halogen at the terminus using halogenated hydrocarbon as a chain transfer agent, described in Japanese Patent Laid-Open No. 4-132706; and methods for obtaining a polymer having a hydroxyl group at the terminus using hydroxyl group-containing mercaptan or hydroxyl group-containing polysulfide as a chain transfer agent, described in Japanese Patent Laid-Open No. 61-271306, Japanese Patent No. 2594402, and Japanese Patent Laid-Open No. 54-47782.

Living radical polymerization will be described below.

First, a method using a radical scavenger such as a nitroxide compound will be described. In this polymerization, a generally stable nitroxy free radical (=N-O-) is used as a radical capping agent. Such compounds used as free radicals are not limited. Preferred examples may include nitroxy free radicals from cyclic hydroxylamine, such as 2,2,6,6-substituted-1-piperidinyloxy radical or 2,2,5,5-substituted-1-pyrrolidinyloxy radical. An alkyl group containing 4 or less carbon atoms, such as a methyl group or ethyl group, is suitable as a substituent. Specific examples of a nitroxy free radical compound, but are not limited to, may include2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-t-butylamineoxy radical. A stable free radical such as a galvinoxyl free radical may also be used instead of nitroxy free radical.

The aforementioned radical capping agent is used in combination with a radical generator. It is considered that a reaction product obtained by the reaction between such a radical capping agent and a radical generator acts as a polymerization initiator, and that the polymerization of addition polymer monomers thereby progresses. The ratio of the two agents combined is not particularly limited. It is appropriate that 0.1 to 10 moles of the radical initiator be used with respect to 1 mole of the radical capping agent.

Various compounds can be used as radical generators. Peroxide capable of generating radicals under polymerization temperature conditions is preferable. Such peroxide is not limited. Examples of such peroxide may include: diacyl peroxides such as benzoyl peroxide or lauroyl peroxide; dial kyl peroxides such as dicumyl peroxide or di-t-butyl peroxide; peroxy carbonates such as diisopropylperoxy dicarbonate or bis(4-t-butylcyclohexyl)peroxy dicarbonate; and alkyl peresters such as t-butylperoxy octoate or t-butylperoxy benzoate. Of these, benzoyl peroxide is particularly preferable. In addition, radical generators including a radical-generating azo compound such an azobisisobutylonitrile may also be used instead of peroxide.

As described in Macromolecules, 1995, 28, 2993, an alkoxyamine compound shown in the following figure may be used as an initiator, instead of the combined use of a radical capping agent and a radical generator.

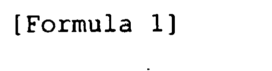

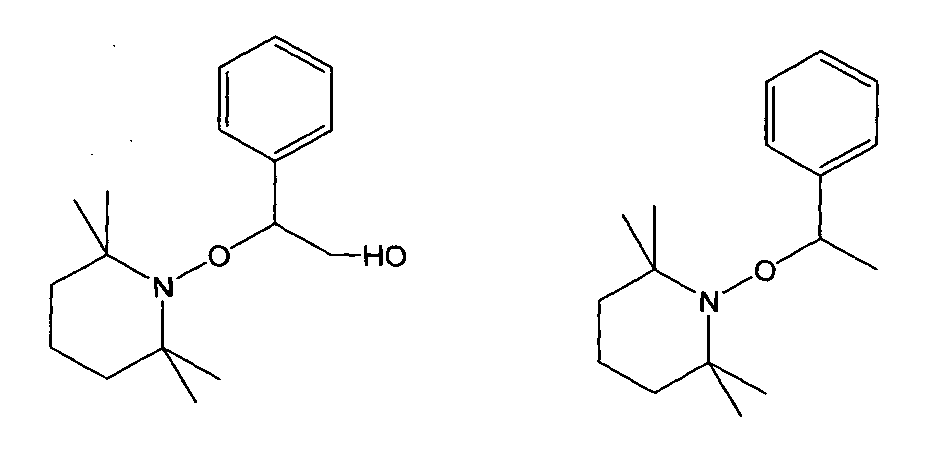

When an alkoxyamine compound is used as an initiator, if the compound having a functional group such as a hydroxyl group shown in the above figure is used, a polymer having a functional group at the terminus can be obtained. If this technique is applied to the method of the present invention, a polymer having a functional group at the terminus is obtained.

Monomers, solvents, and polymerization conditions such as a polymerization temperature, which are used in the polymerization using a radical scavenger such as the aforementioned nitroxide compound, are not limited. The same conditions as used in the atom transfer radical polymerization that will be described next, can be applied.

Next, the "atom transfer radical polymerization" that is preferable for the present invention will be described below.

The atom transfer radical polymerization of the present invention includes what is called reverse atom transfer radical polymerization. Reverse atom transfer radical polymerization is a method of allowing a general radical initiator such as peroxide to act on Cu(II') in a high oxidization state when a general atom transfer radical polymerization catalyst generates radicals, for example, when Cu(I) is used as a catalyst, so as to obtain an equilibrium state that is equivalent to that in the atom transfer radical polymerization (refer to Macromolecules, 1999, 32, 2872).

In the atom transfer radical polymerization, an organic halide, and particularly, an organic halide having a highly reactive carbon-halogen bond (for example, a carbonyl compound having halogen at the α-position, or a compound having halogen at benzyl position), or a halogenated sulfonyl compound, is used as an initiator.

Specific examples of such an initiator may include:
C₆H₅-CH₂X, C₆H₅-C(H) (X) CH₃, C₆H₅-C(X)(CH₃)₂
   wherein, in the above chemical formulae, C₆H₅ represents a phenyl group; and X represents chlorine, bromine, or iodine,
R¹¹-C(H) (X)-CO₂R¹², R¹¹-C(CH₃) (X) -CO₂R¹², R¹¹-C(H)(X)-C(O)R¹², or R¹¹-C(CH₃)(X)-C(O)R¹²,
   wherein, in the above formulae, each of R¹¹ and R¹² represents a hydrogen atom, an alkyl group containing 1 to 20 carbon atoms, an aryl group, or aralkyl group; and X represents chlorine, bromine, or iodine, and
R¹¹-C₆H₄-SO₂X
   wherein, in the above formula, R¹¹ represents a hydrogen atom, an alkyl group containing 1 to 20 carbon atoms, an aryl group, or an aralkyl group; and X represents chlorine, bromine, or iodine.

As an initiator for the atom transfer radical polymerization, organic halides or halogenated sulfonyl compounds that have a functional group other than the functional group used for initiation of the polymerization may also be used. In such a case, a vinyl polymer, which has a functional group at one main chain terminus and the growth terminal structure of the atom transfer radical polymerization at the other main chain terminus, is produced. Examples of such a functional group may include an alkenyl group, a crosslinkable silyl group, a hydroxyl group, an epoxy group, an amino group, and an amide group.

An organic halide having an alkenyl group is not limited. An organic halide having the structure shown in general formula (3) indicated below is an example.

R¹⁴R¹⁵C(X)-R¹⁶-R¹⁷-C(R¹³)= CH₂ (3)

wherein R¹³ represents hydrogen or a methyl group; each of R¹⁴ and R¹⁵ represents hydrogen, a monovalent alkyl group containing 1 to 20 carbon atoms, an aryl group, an aralkyl group, or a ligated body formed by ligating to each other at the other terminus; R¹⁶ represents -C(O)O- (ester group), -C(O)- (keto group), or an o-, m- or p-phenylene group; R¹⁷ represents a direct bond or a divalent organic group containing 1 to 20 carbon atoms that may contain at least one ether bond; and X represents chlorine, bromine, or iodine.

Specific examples of substituents R¹⁴ and R¹⁵ may include hydrogen, a methyl group, an ethyl group, an n-propyl group, an isopropyl group, a butyl group, a pentyl group, and a hexyl group. R¹⁴ and R¹⁵ may be ligated to each other at the other terminus, so as to form a cyclic skeleton.

Specific examples of an organic halide having an alkenyl group shown in the general formula (3) may include:
XCH₂C (O) O(CH₂) ₙCH=CH₂, H₃CC(H)(X)C(O)O(CH₂)ₙCH=CH₂, (H₃C)₂C(X)C (O)O(CH₂)ₙCH=CH₂, and CH₃CH₂C(H) (X)C (O) O (CH₂)ₙCH=CH₂, 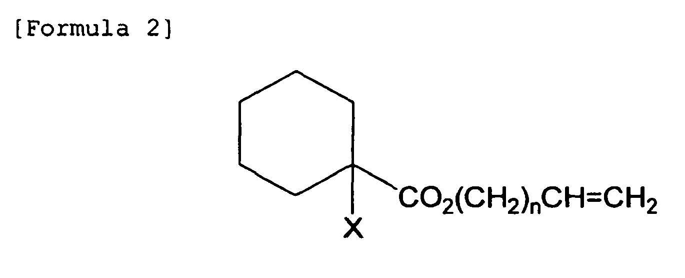 wherein, X represents chlorine, bromine, or iodine; and n represents an integer between 0 and 20,
XCH₂C(O)O(CH₂)nO(CH₂)ₘCH=CH₂, H₃CC(H)(X)C(O)0(CH)nO(CH₂)ₘCH=CH₂, (H₃C)₂C(X)C(O)O(CH₂)ₙO(CH₂)ₘCH=CH₂, and CH₃CH₂C(H) (X) C(O)O(CH)ₙO(CH₂)ₘCH=CH₂, 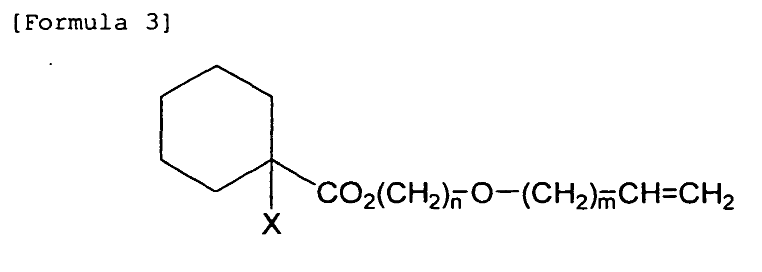 wherein X represents chlorine, bromine, or iodine; n represents an integer between 1 and 20; and m represents an integer between 0 and 20,
o; m,p-XCH₂-C₆H₄-(CH₂)ₙ-CH=CH₂, o,m,p-CH₃C(H) (X)-C₆H₄-(CH₂)ₙ-CH=CH₂, and o,m,p-CH₃CH₂C (H) (X)-C₆H₄-(CH₂)ₙ-CH=CH₂,
   wherein X represents chlorine, bromine, or iodine; and n represents an integer between 0 and 20,
o,m,p-XCH₂-C₆H₄-(CH₂)ₙ-O-(CH₂)m-CH=CH₂, o,m,p-CH₃C(H) (X)-C₆H₄-(CH₂)ₙ-O-(CH₂)ₘ-CH=CH₂, and o, m, p-CH₃CH₂C (H) (X)-C₆H₄- (CH₂) ₙ-O-(CH₂)CH=CH₂,
   wherein X represents chlorine, bromine, or iodine; n represents an integer between 1 and 20; and m represents an integer between 0 and 20,
o,m,p-XCH₂-C₆H₄-O-(CH₂)ₙ-CH=CH₂, o,m,p-CH₃C(H)(X)-C₆H₄-O-(CH₂)ₙ-CH=CH₂,and o,m,p-CH₃CH₂C(H) (X)-C₆H₄-O-(CH₂)ₙ-CH=CH₂,
   wherein X represents chlorine, bromine, or iodine; and n represents an integer between 0 and 20,
o, m,p-XCH₂-C₆H₄-O-(CH₂)ₙ-O-(CH₂)ₘ-CH=CH₂, o,m,p-CH₃C(H)(X)-C₆H₄-O-(CH₂)ₙ-O-(CH₂)ₘ-CH=CH₂, and o,m, p-CH₃CH₂C (H) (X) -C₆H₄-O-(CH₂)ₙ-O-(CH₂)ₘ-CH=CH₂,
   wherein X represents chlorine, bromine, or iodine; n represents an integer between 1 and 20; and m represents an integer between 0 and 20.

As an organic halide having an alkenyl group, a compound represented by the following general formula (4) can be used:

H₂C=C(R¹³)-R¹⁷-C(R¹⁴) (X)-R¹⁸-R¹⁵ (4)

wherein R¹³, R¹⁴, R¹⁵, R¹⁷, and X have the same meanings as described above; and R¹⁸ represents a direct bond, -C(O)O-(ester group), -C(O)- (keto group), or an o-, m- or p-phenylene group.

R¹⁷ represents a direct bond, or a divalent organic group containing 1 to 20 carbon atoms (which may contain at least one ether bond). When R¹⁷ represents a direct bond, a vinyl group binds to the carbon to which halogen binds, and it is a halogenated allyl compound. In this case, since a carbon-halogen bond is activated by a vinyl group adjacent thereto, a C(O)O group, a phenylene group, or the like is not necessarily required as R¹⁸, and it may also be a direct bond. When R¹⁷ is not a direct bond, a C(O)O group, a C(O) group, or a phenylene group is preferably used as R¹⁸ to activate a carbon-halogen bond.

Specific examples of a compound represented by the general formula (4) may include:
CH₂=CHCH₂X,CH₂=C(CH₃)CH₂X, CH₂=CHC (H) (X) CH₃, CH₂=C(CH₃)C(H)(X)CH₃, CH₂=CHC(X)(CH₃)₂, CH₂=CHC(H)(X)C₂H₅, CH₂=CHC(H) (X)CH(CH₃)₂, CH₂=CHC(H)(X)C₆H₅, CH₂=CHC(H) (X)CH₂C₆H₅, CH₂=CHCH₂C(H)(X)-CO₂R, CH₂=CH(CH₂)₂C(H) (X)-CO₂R, CH₂-CH(CH₂)₃C(H)(X)-CO₂R, CH₂=CH(CH₂)₈C(H) (X)-CO₂R, CH₂=CHCH₂C(H)(X)-C₆H₅, CH₂=CH(CH₂)₂C(H) (X)-C₆H₅, and CH₂=CH(CH₂)₃C(H)(X)-C₆H₅, wherein X represents chlorine, bromine, or iodine; and R represents an alkyl group containing 1 to 20 carbon atoms, an aryl group, or an aralkyl group.

Specific examples of a halogenated sulfonyl compound having an alkenyl group may include o-, m-, p-CH₂=CH-(CH₂)ₙ-C₆H₄-SO₂X, and o**-,** m-, P-CH₂=CH-(CH₂)ₙ-O-C₆H₄-SO₂X,
wherein X represents chlorine, bromine, or iodine; and n represents an integer between 0 and 20.

The aforementioned organic halide having a crosslinkable silyl group is not particularly limited. For example, an organic halide having the structure shown in the following general formula (5) is used:
R¹⁴R¹⁵C (X)-R¹⁶-R¹⁷-C (H) (R¹³)CH₂-[Si(R¹⁹)_{2-b}(Y)_{b}O]ₘ-Si (R²⁰) _{3 -a}(Y)ₐ (5)
wherein R¹³, R¹⁴, R¹⁵, R¹⁶, R¹⁷, and X have the same meanings as described above; each of R¹⁹ and R²⁰ represents an alkyl group containing 1 to 20 carbon atoms, an aryl group, or an aralkyl group, or a triorganosiloxy group represented by (R')₃SiO-, wherein R' represents a monovalent hydrocarbon group containing 1 to 20 carbon atoms, and three R's may be identical to or different from one another, and when two or more R¹⁹s or R²⁰s exist, these may be identical to or different from one another; Y represents a hydroxyl group or a hydrolyzable group, and when two or more Ys exist, these may be identical to or different from one another; and a represents 0,1,2, or 3, b represents 0, 1, or 2, and m represents an integer between 0 and 19, which satisfies a + mb ≥ 1.

Specific examples of a compound represented by the general formula (5) may include:
XCH₂C(O)O(CH₂)ₙSi(OCH₃)₃, CH₃C(H)(X)C(O)O(CH₂)ₙSi(OCH₃)₃, (CH₃)₂C(X)C(O)O(CH₂)ₙSi(OCH₃)₃, XCH₂C(O)O(CH₂)ₙSi(CH₃)(OCH₃)₂, CH₃C(H)(X)C(O)O(CH₂)ₙSi(CH₃)(OCH₃)₂, and (CH₃)₂C(X)C(O)O(CH₂)ₙSi(CH₃)(OCH₃)₂,
   wherein X represents chlorine, bromine, or iodine; and n represents an integer between 0 and 20,
   XCH_{2C} (O) O (CH₂) nO (CH₂)ₘSi (OCH₃) H₃CC (H) (X) C (O) O (CH₂) ₙO (CH₂) ₘSi (OCH₃)₃, (H₃C) ₂C (X) C (O) O (CH₂) ₙO (CH₂) ₘSi (OCH₃)₃, CH₃CH₂C (H) (X)C (O) O (CH₂) ₙO (CH₂)ₘSi (OCH₃)₃, XCH₂C (O) O (CH) ₙO (CH₂) ₘSi (CH₃) (OCH₃) ₂, H₃CC(H) (X)C(O)O(CH₂)ₙO(CH₂)ₘ-Si(CH₃) (OCH₃)₂, (H₃C)₂C(X)C(O)O(CH₂)ₙO(CH₂)ₘ-Si(CH₃)(OCH₃)₂, and CH₃CH₂C(H)(X)C(O)O(CH₂)ₙO(CH₂)ₘ-Si(CH₃)(OCH₃)₂,
   wherein X represents chlorine, bromine, or iodine; n represents an integer between 1 and 20; and m represents an integer between 0 and 20,
   o**,** m,p-XCH₂-C₆H₄-(CH₂)₂Si(OCH₃)₃, o,m,p-CH₃C(H)(X)-C₆H₄-(CH₂) ₂Si (OCH₃)₃, o,m,p-CH₃CH₂C(H)(X)-C₆H₄-(CH₂)₂Si (OCH₃)₃, o,m,p-XCH₂-C₆H₄-(CH₂)₃Si(OCH₃)₃, o,m,p-CH₃C(H)(X)-C₆H₄-(CH₂)₃Si(OCH₃)₃, o,m,p-CH₃CH₂C(H) (X)-C₆H₄-(CH₂)₃Si(OCH₃)₃, o,m, p-XCH₂-C₆H₄-(CH₂)₂-O-(CH₂)₃Si(OCH₃)₃, o,m,p-CH₃C(H) (X)-C₆H₄- (CH₂)₂-O-(CH₂) ₃Si (OCH₃) ₃, o,m,p-CH₃CH₂C(H) (X)-C₆H₄-(CH₂)₂-O-(CH₂)₃Si(OCH₃)₃, o,m,p-XCH₂-C₆H₄-O- (CH₂) ₃Si (OCH₃) ₃, o,m,p-CH₃C(H)(X)-C₆H₄-0-(CH₂)₃Si (OCH₃) ₃ o,m,p-CH₃CH₂C(H)(X)-C₆H₄-O- (CH₂)₃-Si (OCH₃)₃, o,m,p-XCH₂-C₆H₄-O-(CH₂)₂-O- (CH₂)₃-Si (OCH₃)₃, o**,**m,p-CH₃C(H) (X)-C₆H₄-O- (CH₂) ₂-O- (CH₂) ₃Si (OCH₃)₃, and o,m, p-CH₃CH₂C (H) (X) -C₆H₄-O- (CH₂)₂-O- (CH₂)₃Si (OCH₃)₃,
   wherein X represents chlorine, bromine, or iodine.

An organic halide having the structure shown in the following general formula (6) is another example of the aforementioned organic halide having a crosslinkable silyl group:

(R²⁰) ₃₋ₐ (Y)ₐSi- [OSi (R¹⁹) _{2-b}(y)_{b}] ₘ-CH₂-C (H) (R¹³) -R¹⁷-C (R¹⁴) ( X) -R¹⁸-R¹⁵ (6)

wherein R¹³ R¹⁴, R¹⁵, R¹⁷, R¹⁸, R¹⁹, R²⁰ a, b, m, X and Y have the same meanings as described above.

Specific examples of such a compound may include:
(CH₃O) ₃SiCH₂CH₂C (H) (X) C₆H₅, (CH₃O)₂ (CH₃) SiCH₂CH₂C (H) (X) C₆H₅, (CH₃O₃Si (CH₂)₂C (H) (X) -CO₂R, (CH₃O)₂ (CH₃) Si (CH₂)₂C (H) (X) -CO₂R, (CH₃O₃Si (CH₂)₃C (H) (X) -CO₂ (CH₃O)₂ (CH₃) Si (CH₂)₃C (H) (X) -CO₂R, (CH₃O)₃Si (CH₂)₄C (H) (X) -CO₂R, (CH₃O)₂ (CH₃) Si (CH₂)₄C (H) (X) -CO₂R, (CH₃O)₃Si (CH₂)₉C(H) (X)-CO₂R, (CH₃O)₂(CH₃)Si(CH₂)₉C(H) (X)-CO₂ (CH₃O)₃Si (CH₂)₃C(H) (X) -C₆H₅, (CH)O)₂(CH₃)Si(CH₂)₃C(H) (X) -C₆H₅, (CH₃O)₃Si (CH₂) ₄C(H)(X)-C₆H₅, and (CH₃O)₂ (CH₃) Si (CH₂)₄C (H) (X) -C₆H₅,
wherein X represents chlorine, bromine, or iodine; and R represents an alkyl group containing 1 to 20 carbon atoms, an aryl group, or an aralkyl group.

The aforementioned organic halide or halogenated sulfonyl compound having a hydroxyl group is not particularly limited. For example, a compound represented by the following formula is used:

HO-(CH₂)ₙ-OC(O)C(H) (R) (X)

wherein X represents chlorine, bromine, or iodine; R represents an alkyl group containing 1 to 20 carbon atoms, an aryl group, or an aralkyl group; and n represents an integer between 1 and 20.

The aforementioned organic halide or halogenated sulfonyl compound having an amino group is not particularly limited. For example, a compound represented by the following formula is used:

H₂N-(CH₂)ₙ-OC(O)C(H) (R) (X)

wherein, X represents chlorine, bromine, or iodine; R represents a hydrogen atom, an alkyl group containing 1 to 20 carbon atoms, an aryl group, or an aralkyl group; and n represents an integer between 1 and 20.

The aforementioned organic halide or halogenated sulfonyl compound having an epoxy group is not particularly limited. For example, a compound represented by the following formula is used: 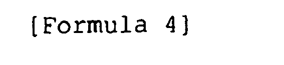 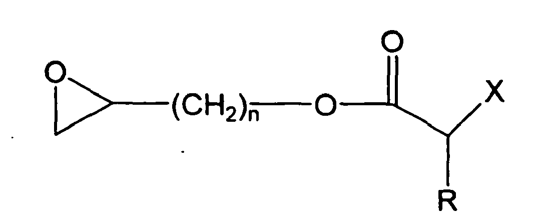 wherein X represents chlorine, bromine, or iodine; R represents a hydrogen atom, an alkyl group containing 1 to 20 carbon atoms, an aryl group, or an aralkyl group; and n represents an integer between 1 and 20.

In order to obtain a polymer having two or more terminal structures of the present invention in a single molecule, an organic halide or halogenated sulfonyl compound having two or more initiation points is preferably used as an initiator. Specific examples may include: 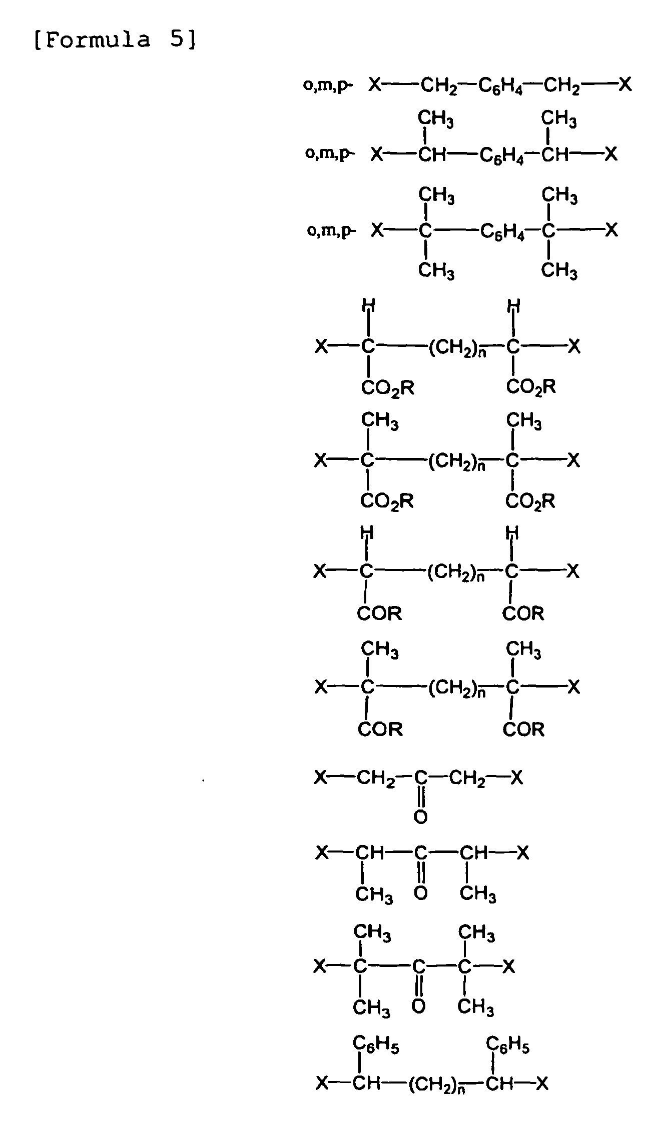 wherein X represents chlorine, bromine, or iodine; R represents a hydrogen atom, an alkyl group containing 1 to 20 carbon atoms, an aryl group, or an aralkyl group; and n represents an integer between 1 and 20, 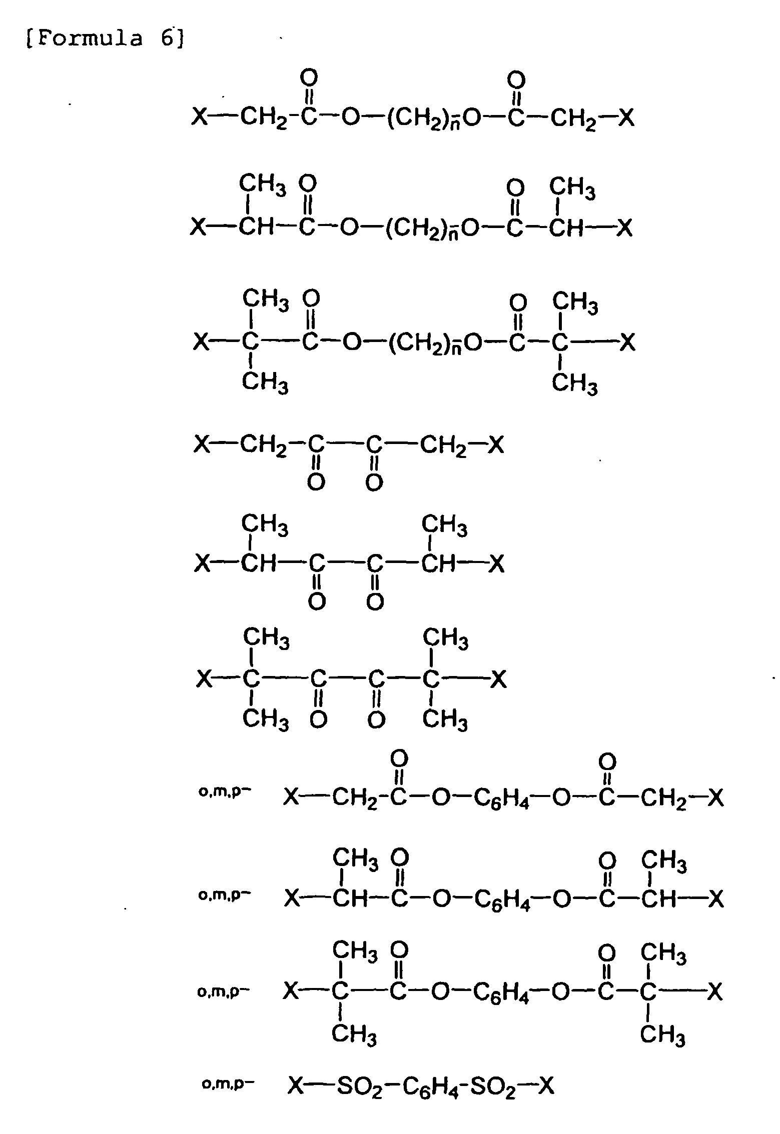 wherein X represents chlorine, bromine, or iodine; and n represents an integer between 1 and 20.

The type of a vinyl monomer used in this polymerization is not particularly limited, and all of the above described examples can preferably be used.

The type of a transition metal complex used as a polymerization catalyst is not particularly limited. Preferred examples of such a transition metal complex may include metal complexes that contain, as a central metal, the 7^{th} group, 8^{th} group, 9^{th} group, 10^{th} group, or 11^{th} group element of the periodic table. More preferred examples may include complexes of zero-valent copper, monovalent copper, divalent ruthenium, divalent iron, or divalent nickel. Of these, a copper complex is preferable. Specific examples of a monovalent copper compound may include cuprous chloride, cuprous bromide, cuprous iodide, cuprous cyanide, cuprous oxide, and cuprous perchlorate. When a copper compound is used, in order to enhance catalytic activity, ligands including 2,2'-bipyridyl or a derivative thereof, 1, 10-phenanthroline or a derivative thereof, or polyamines such as tetramethylethylenediamine, pentamethyldiethylenetriamine, or hexamethyltris(2-aminoethyl)amine, are added. In addition, a tristriphenylphosphine complex of divalent ruthenium chloride (RuCl₂(PPh₃)₃) is also preferable as a catalyst. When a ruthenium compound is used as a catalyst, aluminum alkoxides are added as activators. Moreover, a bistriphenylphosphine complex of divalent iron (FeCl₂ (PPh₃)₂), a bistriphenylphosphine complex of divalent nickel (NiC1₂ (PPh₃)₂), and a bistributylphosphine complex of divalent nickel (NiBr₂(PBu₃)₂) are also preferable as catalysts.

Polymerization can be carried out in no solvents or in various types of solvents. Examples of the type of a solvent may include: hydrocarbon solvents such as benzene or toluene; ether solvents such as diethyl ether or tetrahydrofuran; halogenated hydrocarbon solvents such as methylene chloride or chloroform; ketone solvents such as acetone, methyl ethyl ketone, or methyl isobutyl ketone; alcohol solvents such as methanol, ethanol, propanol, isopropanol, n-butyl alcohol, or tert-butyl alcohol; nitrile solvents such as acetonitrile, propionitrile, or benzonitrile; ester solvents such as ethyl acetate or butyl acetate; and carbonate solvents such as ethylene carbonate or propylene carbonate. These solvents can be used singly or in combination with two or more types. Polymerization can be carried out within a temperature range between 0°C and 200°C, and preferably between 50C° and 150°C, but the temperature range is not limited thereto.

### Method for introducing crosslinkable silyl group into vinyl polymer

Next, a method for introducing a crosslinkable silyl group into a vinyl polymer will be described, but the method is not limited to the following examples.

First, a method for introducing a crosslinkable silyl group, an alkenyl group, and a hydroxyl group into a vinyl polymer by conversion of a functional group at the terminus, will be described. Since such a functional group can act as precursors for one another, explanation begins with a crosslinkable silyl group.

Examples of a method for synthesizing a vinyl polymer having at least one crosslinkable silyl group may include: (A) a method of adding a hydrosilane compound having a crosslinkable silyl group to a vinyl polymer having at least one alkenyl group in the presence of a hydrosilylation catalyst; (B) a method of allowing a compound having, in a single molecule thereof, crosslinkable silyl groups and a group capable of reacting with a hydroxyl group, such as an isocyanate group, to react with a vinyl polymer having at least one hydroxyl group; (C) a method of allowing a compound having a polymerizable alkenyl group and a crosslinkable silyl group in a single molecule thereof, to react with a vinyl polymer when such a vinyl polymer is synthesized by radical polymerization; (D) a method of using a chain transfer agent having a crosslinkable silyl group when a vinyl polymer is synthesized by radical polymerization; and (E) a method of allowing a compound having a crosslinkable silyl group and stable carbanions in a single molecule thereof to react with a vinyl polymer having at least one highly reactive carbon-halogen bond.

The vinyl polymer having at least one alkenyl group used in the method (A) can be obtained by various methods. Examples of such synthesis methods will be given below, but methods are not limited to such examples.
(A-a) A method of allowing a compound used as a second monomer represented by the followinggeneral formula (7), which has a polymerizable alkenyl group and an alkenyl group with a low polymerization degree in a single molecule thereof, to react with a vinyl polymer, when the vinyl polymer is synthesized by radical polymerization:

   H_{2C} = C(R²⁴)-R²⁵-R²⁶-C(R²⁷) = CH₂ (7)

   wherein R²⁴ represents hydrogen or a methyl group; R²⁵ represents -C(O)O-, or an o-, m-, or p-phenylene group; R²⁶ represents a direct bond, or a divalent organic group containing 1 to 20 carbon atoms, which may contain at least one ether bond; and R²⁷ represents hydrogen, an alkyl group containing 1 to 20 carbon atoms, an aryl group containing 6 to 20 carbon atoms, or an aralkyl group containing 7 to 20 carbon atoms.
   The timing of allowing a compound having a polymerizable alkenyl group and an alkenyl group with a low polymerization degree, in a single molecule thereof, to react with a vinyl polymer, is not limited. In particular, when living radical polymerization is carried out and high properties of rubber are anticipated, it is preferable that the above compound used as a second monomer be allowed to react with a vinyl polymer at the terminal stage of the polymerization reaction, or after completion of the reaction of certain monomers.
(A-b) A method of allowing a compound having at least two alkenyl groups with a low polymerization degree, such as 1, 5-hexadiene, 1,7-octadiene, or 1, 9-decadiene, to react with a vinyl polymer, at the terminal stage of the polymerization reaction, or after completion of the reaction of certain monomers, during the synthesis of the vinyl polymer by atom transfer radical polymerization.
(A-c) A method of allowing various types of organic metal compounds having an alkenyl group, including organic tins such as allyl tributyl tin or allyl trioctyl tin, to react with a vinyl polymer having at least one highly reactive carbon-halogen bond at the terminus produced by atom transfer radical polymerization, so as to substitute halogens.
(A-d) A method of allowing stabilized carbanions having an alkenyl group represented by the following general formula (8) to react with a vinyl polymer having at least one highly reactive carbon-halogen bond at the terminus produced by atom transfer radical polymerization, so as to substitute halogens:

   M⁺C⁻(R²⁸) (R²⁹)-R³⁰-C(R²⁷)= CH₂ (8)

   wherein R²⁷ has the same meaning as described above; both R²⁸ and R²⁹ represent an electron attracting group for stabilizing carbanion C⁻, or either one of R²⁸ and R²⁹ represents the above attracting group and the other represents hydrogen, an alkyl group containing 1 to 10 carbon atoms, or a phenyl group; R³⁰ represents a direct bond or a divalent organic group containing 1 to 10 carbon atoms, which may contain at least one ether bond; and M⁺ represents an alkali metal ion or a quarte.rnary ammonium ion.
   As the electron attracting group represented by R²⁸ and R²⁹, those having the structures, -CO₂R -C(O)R, and -CN are particularly preferable.
(A-e) A method, which comprises: allowing a metal simplex such as zinc or an organic metal compound to act on a vinyl polymer having at least one highly reactive carbon-halogen bond at the terminus produced by atom transfer radical polymerization, so as to prepare enolate anions; and then allowing the obtained enolate anions to react with electrophilic compounds having an alkenyl group, such as an alkenyl group-containing compound having a leaving group such as halogen or an acetyl group, a carbonyl compound having an alkenyl group, an isocyanate compound having an alkenyl group, or an acid halide having an alkenyl group.
(A-f) A method of allowing oxyanions or carboxylate anions having an alkenyl group represented by the following general formula (9) or (10) to react with a vinyl polymer having at least one highly reactive carbon-halogen bond at the terminus produced by atom transfer radical polymerization, so as to substitute halogens:

   H₂C = C(R²⁷)-R³¹-O⁻M⁺ (9)

   wherein R²⁷ and M⁺ have the same meanings as described above; and R²¹ represents a divalent organic group containing 1 to 20 carbon atoms, which may contain at least one ether bond,

   H₂C = C(R²⁷)-R³²-C(O)O⁻M⁺ (10)

   wherein R²⁷ and M⁺ have the same meanings as described above; and R²² represents a direct bond, or a divalent organic group containing 1 to 20 carbon atoms, which may contain at least one ether bond.
   Such a vinyl polymer having at least one alkenyl group can also be obtained from a vinyl polymer having at least one hydroxyl group. Methods mentioned below are applied, but examples are not limited to such methods. Examples of such a method may include:
(A-g) a method of allowing a base such as sodium methoxide to act on a hydroxyl group contained in a vinyl polymer having at least one hydroxyl group, and then allowing the resultant to react with an alkenyl group-containing halide such as allyl chloride;
(A-h) a method of allowing an alkenyl group-containing isocyanate compound such as allyl isocyanate to react with a hydroxyl group contained in a vinyl polymer having at least one hydroxyl group;
(A-i) a method of allowing an alkenyl group-containing halide such as (meth) acrylic chloride to react with a hydroxyl group contained in a vinyl polymer having at least one hydroxyl group in the presence of a base such as pyridine; and
(A-j) a method of allowing alkenyl group-containing carboxylic acid such as acrylic acid to react with a hydroxyl group contained in a vinyl polymer having at least one hydroxyl group in the presence of an acid catalyst.

Of the above described production methods, the method (A-b) is more preferable in terms of controllability.

By allowing a vinyl polymer having an alkenyl group produced by the above described methods to react with a hydrosilane compound having a crosslinkable silyl group, the alkenyl group can be converted into a crosslinkable silyl group. A hydrosilane compound having a crosslinkable silyl group is not particularly limited. The compound represented by the following general formula (11) is a representative example of such a hydrosilane compound having a crosslinkable silyl group.

H-[Si(R⁹)_{2-b}(Y)_{b}O]ₘ-Si(R¹⁰)₃₋ₐ(Y)ₐ (11)

wherein each of R⁹ and R¹⁰ represents an alkyl represents an alkyl group containing 1 to 20 carbon atoms, an aryl group containing 6 to 20 carbon atoms, an aralkyl group containing 7 to 20 carbon atoms, or a triorganosiloxy group represented by (R')₃SiO-, wherein R' represents a monovalent hydrocarbon group containing 1 to 20 carbon atoms, and three R's may be identical to or different from one another, and when two or more R⁹s or R¹⁰s exist, these may be identical to or different from one another; Y represents a hydroxyl group or a hydrolyzable group, and when two or more Ys exist, these may be identical to or different from one another; and a represents 0, 1, 2, or 3, b represents 0, 1, or 2, and m represents an integer between 0 and 19, which satisfies a + mb ≥ 1.

Of these hydroxysilane compounds, a compound having crosslinkable groups represented by the following general formula (12) is particularly preferable because it is easily obtained:

H-Si(R¹⁰)₃₋ₐ(Y)ₐ (12)

wherein R¹⁰, Y, and a have the same meanings as described above.

When the aforementioned hydrosilane compound having a crosslinkable silyl group is added to an alkenyl group, a transition metal catalyst is generally used. Examples of a transition metal catalyst may include: a platinum simplex; a product formed by dispersing a platinum solid into a carrier such as alumina, silica, or carbon black; chloroplatinic acid; a complex of chloroplatinic acid with alcohol, aldehyde, ketone, or the like; a platinum-olefin complex; and a platinum (0)-divinyltetramethyldisiloxane complex. Examples of a catalyst other than a platinum compound may include RhCl ( PPh₃)₃, RhCl₃, RuCl₃, IrCl₃, FeCl₃, AlCl₃, PdCl₂·H₂O, NiCl₂, and TiCl₄.

Examples of a method for producing a vinyl polymer having at least one hydroxyl group that is used in the methods (B) and (A-g) to (A-j), but are not limited to, will be given below.
(B-a) A method of allowing a compound used as a second monomer that has a polymerizable alkenyl group and a hydroxyl group in a single molecule thereof represented by the following general formula (13) to react with a vinyl polymer, when the vinyl polymer is synthesized by atom transfer radical polymerization:

   H₂C = C(R²⁴)-R²⁵-R²⁶-OH (13)

   wherein R²⁴, R²⁵, and R²⁶ have the same meanings as described above.
   The timing of allowing a compound having a polymerizable alkenyl group and a hydroxyl group in a single molecule thereof to react with a vinyl polymer is not limited. In particular, when a molded product obtained is expected to have high properties of rubber, it is preferable that the above compound used as a second monomer be allowed to react with a vinyl polymer at the terminal stage of the polymerization reaction, or after completion of the reaction of certain monomers.
(B-b) A method of allowing alkenyl alcohol such as 10-undecenol, 5-hexenol, or allyl alcohol, to react with a vinyl polymer, at the terminal stage of the polymerization reaction, or after completion of the reaction of certain monomers, when the vinyl polymer is synthesized by atom transfer radical polymerization.
(B-g) A method of allowing stabilized carbanions having a hydroxyl group represented by the following general formula (14) to react with a vinyl polymer having at least one highly reactive carbon-halogen bond at the terminus produced by atom transfer radical polymerization, so as to substitute halogens:

   M+C-(R²⁸) (R²⁹)-R³⁰-OH (14)

   wherein R²⁸, R²⁹, and R³⁰ have the same meanings as described above.
   As the electron attracting group represented by R²⁸ and R²⁹, those having the structures, -CO₂R, -C(O)R, and -CN, are particularly preferable.
(B-h) A method, which comprises: allowing a metal simplex such as zinc or an organic metal compound to act on a vinyl polymer having at least one highly reactive carbon-halogen bond at the terminus produced by atom transfer radical polymerization, so as to prepare enolate anions; and then allowing aldehydes or ketones to react with the enolate anions.
(B-i) A method of allowing oxyanions or carboxylate anions having a hydroxyl group represented by the following general formula (15) or (16) to react with a vinyl polymer having at least one highly reactive carbon-halogen bond at the terminus produced by atom transfer radical polymerization, so as to substitute halogens:

   HO-R³¹-O⁻M⁺ (15)

   wherein R³¹ and M⁺ have the same meanings as described above,

   HO-R³²-C(O)O⁻M⁺ (16)

   wherein R³² and M⁺ have the same meanings as described above.
(B-j) A method of allowing a compound used as a second monomer that has an alkenyl group with a low polymerization degree and a hydroxyl group in a single molecule thereof, to react with a vinyl polymer, at the terminal stage of the polymerization reaction, or after completion of the reaction of certain monomers, during the synthesis of the vinyl polymer by atom transfer radical polymerization.

Such a compound is not particularly limited. The compound represented by the following general formula (17) is an example of such a compound:

H₂C = C(R²⁴)-R³1-OH (17)

wherein R²⁴ and R³¹ have the same meanings as described above.

The compound represented by the above general formula (18) is not particularly limited. Preferred examples may include alkenyl alcohols such as 10-undecenol, 5-hexenol, or allyl alcohol, because they are easily obtained.

Of the production methods (B-a), (B-b), (B-g) to (B-e), and (B-j), the method (B-b) is more preferable in terms of controllability.

Examples of a compound having, in a single molecule thereof, a crosslinkable silyl group and a group capable of reacting with a hydroxyl group, such as an isocyanate group, may include γ-isocyanatepropyltrimethoxysilane, γ-isocyanatepropylmethyldimethoxysilane, and γ-isocyanatepropyltriethoxysilane. Generally known catalysts that are used for urethanation reactions can be used herein, as necessary.

Examples of a compound having a polymerizable alkenyl group and a crosslinkable silyl group in a single molecule thereof that is used in the method (C) may include compounds represented by the following general formula (18), such as trimethoxysilylpropyl (meth)acrylate or methyldimethoxysilylpropyl (meth)acrylate:

H₂C = C(R²⁴)-R²⁵-R³³-[Si(R⁹)_{2-b}(Y)_{b}O]ₘSi(R¹⁰)₃₋ₐ(Y)ₐ (18)

wherein R⁹, R¹⁰, R²⁴, R²⁵, Y, a, b, and m have the same meanings as described above; and R³³ represents a direct bond, or a divalent organic group containing 1 to 20 carbon atoms, which may contain at least ether bond.

The timing of allowing a compound having a polymerizable alkenyl group and a crosslinkable silyl group in a single molecule thereof to react with a vinyl polymer is not limited. In particular, when living radical polymerization is carried out and high properties of rubber are anticipated, it is preferable that the above compound used as a second monomers be allowed to react with a vinyl polymer at the terminal stage of the polymerization reaction, or after completion of the reaction of certain monomers.

Examples of a chain transfer agent having a crosslinkable silyl group used in the chain transfer agent method (D) may include mercaptan having a crosslinkable silyl group and hydrosilane having a crosslinkable silyl group, which are described in Japanese Patent Publication Nos. 3-14068 and 4-55444.

The above-described vinyl polymer having at least one highly reactive carbon-halogen bond used in the method (E) is synthesized by the atom transfer radical polymerization method. The compound represented by the following general formula (19) is an example of a compound having a crosslinkable silyl group and stabilized carbanions in a single molecule thereof:

M+C-(R²⁸) (R²¹)-R³¹-C(H)(R³¹)-CH₂-[Si(R⁹)_{2-b}(Y)_{b}O]ₘ-Si(R¹⁰)₃ -ₐ(Y)ₐ (19)

wherein R⁹, R¹⁰, R²⁸, R²⁹, Y, a, b, and m have the same meanings as described above; R³⁴ represents a direct bond, or a divalent organic group containing 1 to 10 carbon atoms, which may contain at least one ether bond; and R³⁵ represents hydrogen, an alkyl group containing 1 to 10 carbon atoms, an aryl group containing 6 to 10 carbon atoms, and an aralkyl group containing 7 to 10 carbon atoms.

As the electron attracting group represented by R²⁸ and R²⁹, those having the structures -CO₂R, -C(O)R, and -CN are particularly preferable.

### <Curable composition>

The present invention relates to a curable composition comprising the above described vinyl polymer having a crosslinkable silyl group.

### Form of curable composition

The curable composition of the present invention may be prepared in the form of a one-component composition by previously mixing all components, hermetically conserving the obtained mixture, and curing it with moisture contained in the air after using it. Alternatively, components such as a curing catalyst, a filler, a plasticizer, and water have been mixed in advance, separately. Thereafter, the mixed material may be mixed with a polymer composition before use. Thus, the curable composition of the present invention may also be prepared in the form of a two-component composition.

Decrease in storage stability, which is the problem to be solved by the present invention, often occurs in the one-component composition wherein a catalyst or a silane coupling agent are mixed before storage. Thus, in order to sufficiently obtain the effects of the present invention, the one-component composition is preferable.

### Mixed material

For a curable composition comprising a polymer having a crosslinkable silyl group, a curing catalyst or a silane coupling agent is often mixed. Decrease in storage stability, which is the problem to be solved by the present invention, often occurs in a case where such a curing catalyst or silane coupling agent is mixed. Thus, in order to sufficiently obtain the effects of the present invention, a mixture containing these components is preferable. In addition, various types of additives may be added, depending on physical properties of interest.

### (Condensation catalyst)

A polymer having a crosslinkable silyl group is crosslinked and cured by forming a siloxane bond in the presence or absence of various types of condensation catalysts that have previously been known. Various types of cured products ranging from a rubber product to a resin product can be produced, depending on the molecular weight of a polymer and a main chain skeleton thereof.

Examples of such a condensation catalyst may include: silanol condensation catalysts, which include tetravalent tin compounds such as dibutyltin dilaurate, dibutyltin diacetate, dibutyltin diethyl hexanoate, dibutyltin dioctate, dibutyltin dimethyl maleate, dibutyltin diethyl maleate, dibutyltin dibutyl maleate, dibutyltin diisooctyl maleate, dibutyltin ditridecyl maleate, dibutyltin dibenzyl maleate, dibutyltin maleate, dioctyltin diacetate, dioctyltin distearate, dioctyltin dilaurate, dioctyltin diethyl maleate, or dioctyltin diisooctyl maleate; divalent tin compounds such as tin octoate, tin naphthenate, or tin stearate; titanates such as tetrabutyl titanate or tetrapropyl titanate; organic aluminum compounds such as aluminum trisacetyl acetonate, aluminum trisethyl acetoacetate, or diisopropoxyaluminum ethyl acetoacetate; chelate compounds such as zirconium tetraacetyl acetonate or titanium tetraacetyl acetonate; zinc octoate; amine compounds such as butylamine, octylamine, laurylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole, or 1,8-diazabicyclo(5,4,0)undecen-7 (DBU); salts with carboxylic acids of these amine compounds ; reaction products and mixtures between laurylamines and tin octoates; low molecular weight polyamide resins obtained from excessive polyamines and polybasic acids; reaction products between excessive polyamines and epoxy compounds; silane coupling agents having an amino group, such as γ-aminopropyltrimethoxysilane or N-(β-aminoethyl)aminopropylmethyldimethoxysilane, and further, known silanol condensation catalysts including other acid catalysts and basic catalysts.

In the case of a one-component composition, tetravalent tin compounds are often used in terms of curing properties. Decrease in storage stability, which is a problem to be solved by the present invention, often occurs when such a tetravalent tin compound is mixed. Accordingly, in order to sufficiently obtain the effects of the present invention, such tetravalent tin compounds are preferably used.

These catalysts may be used singly or in combination with two or more types. Such a condensation catalyst is mixed at an amount preferably between approximately 0.1 and 20 parts, and more preferably between 1 and 10 parts, with respect to 100 parts (parts by weight; hereinafter the term "part" is defined in the same manner). If the amount of a silanol condensation catalyst mixed were below the above range, a curing speed would decrease, or a curing reaction would not sufficiently progress. In contrast, if the amount of a silanol condensation catalyst mixed exceeded the above range, local heating or bubbles would be generated during the curing reaction, and thereby a good curing product would be hardly obtained. In addition, a pot life would become too short, and thus it is not preferable in terms of workability. In order to control curing properties, tin curing catalysts are preferably used, although catalysts are not particularly limited thereto.

### (Component (III): amine compound)

In order to maintain the adhesiveness of a curable composition or to improve catalytic activity, an amine compound in the form of an aminosilane is added as component (III) . As amine compounds, aminosilanes that will be described later in the "silane coupling agent" section are preferable, and aminosilanes having a primary amino group are particularly preferable. Decrease in storage stability, which is a problem to be solved by the present invention, often occurs when an amine compound is added, and particularly when a primary amine compound is added. Accordingly, in order to sufficiently obtain the effects of the present invention, a mixture to which these amine compounds are added is preferable.

### (Silane coupling agent)

Silane coupling agents, or agents for imparting adhesiveness to compositions other than the silane coupling agents, can be added to the curable composition of the present invention. Specific examples of such a silane coupling agent may include: isocyanate group-containing silanes such as γ-isocyanatepropyltrimethoxysilane, γ-isocyanatepropyltriethoxysilane, γ-isocyanatepropylmethyldiethoxysilane, or γ-isocyanatepropylmethyldimethoxysilane; amino group-containing silanes such as γ-aminopropyltrimethoxysilane, γ-aminopropyltriethoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-ureidepropyltrimethoxysilane, N-phenyl-γ-aminopropyltrimethoxysilane, N-benzyl-γ-aminopropyltrimethoxysilane, or N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane, or γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, or β-(3,4-epoxycyclohexyl)ethyltriethoxysilane; carboxysilanes such as β-carboxyethyltriethoxysilane, β-carboxyethylphenylbis(2-methoxyethoxy) silane, or N-β-(carboxymethyl)aminoethyl-y-aminopropyltrimethoxysila ne; unsaturated vinyl group-containing silanes such as vinyltrimethoxysilane, vinyltriethoxysilane, γ-methacryloyloxypropylmethyldimethoxysilane, or γ-acryloyloxypropylmethyltriethoxysilane; halogen-containing silanes such as γ-chloropropyltrimethoxysilane; and isocyanurate silanes such as tris(trimethoxysilyl)isocyanurate. In addition, derivatives obtained by modifying these compounds, such as an amino modified silyl polymer, a silylated amino polymer, an unsaturated amino silane complex, a phenylamino long chain alkyl silane, aminosilylated silicon, or a silylated polyester, can also be used as silane coupling agents.

In order to maintain adhesiveness, aminosilanes are used, and amino silanes having a primary amino group are particularly preferable. Decrease in storage stability, which is a problem to be solved by the present invention, often occurs, when aminosilanes are added, and particularly when an aminosilane having a primary amino group is added. Accordingly, in order to sufficiently obtain the effects of the present invention, a mixture to which these aminosilane compounds are added is preferable.

The silane coupling agent used in the present invention is generally used within a range between 0.1 and 20 parts with respect to 100 parts of vinyl polymer containing a crosslinkable silyl group. It is particularly preferably used within a range between 0.5 and 10 parts. The silane coupling agent added to the curable composition of the present invention particularly significantly exhibits the effect of improving adhesiveness to various materials to be adhered, when the silane coupling agent is used in inorganic base materials such as glass, aluminum, stainless, zinc, copper or mortar, or for organic base materials such as vinyl chloride, acryl, polyester, polyethylene, polypropylene or polycarbonate, under conditions without or with primer treatments. When the silane coupling agent is used under conditions without primer treatments, the effect of improving adhesiveness to various material to be adhered is further particularly significant.

Specific examples of an agent for imparting adhesiveness other than such a silane coupling agent may include epoxy resin, phenol resin, sulfur, alkyl titanate, and aromatic polyisocyanate, although examples are not particularly limited thereto.

Agents for imparting adhesiveness to compositions, such as a silane coupling agent, may be used singly or in combination with two or more types. Adhesiveness to a material to be adhered can be improved by adding these adhesiveness-imparting agents. In order to improve adhesiveness, and particularly adhesiveness to the surface of metal such as oil pan, among the aforementioned adhesiveness-imparting agents, a silane coupling agent is preferably used within a range between 0.1 and 20 parts by weight, although it is not particularly limited.

### (Plasticizer)

Various types of plasticizers are used for the curable composition of the present invention, as necessary. The type of such a plasticizer is not particularly limited. Depending on purposes such as the control of physical properties or characteristics, vinyl polymers obtained by polymerizing vinyl monomers may be used singly or in combination with two or more types. That is to say, examples of a plasticizer may include: phthalate esters such as dibutyl phthalate, diheptyl phthalate, di(2-ethylhexyl)phthalate, or butyl benzyl phthalate; nonaromatic dibasic esters such as dioctyl adipate, dioctyl sebacate, dibutyl sebacate, or isodecyl succinate; aliphatic esters such as butyl oleate or methyl acetyl ricinolate; esters of polyalkylene glycols, such as diethylene glycol dibenzoate, triethylene glycol dibenzoate, or pentaerythritol ester; phosphoric esters such as tricresyl phosphate or tributyl phosphate; trimellitic esters; polystyrenes such as polystyrene or poly-α-methylstyrene; polybutadiene, polybutene, polyisobutylene, butadiene-acrylonitrile, and polychloroprene; chlorinated paraffins; hydrocarbon oils such as alkyl diphenyl or partially hydrogenated terphenyl; process oils; polyethers including polyether polyols such as polyethylene glycol, polypropylene glycol, or polytetramethylene glycol, and derivatives obtained by converting a hydroxyl group of these polyether polyols into an ester group or an ether group; epoxy plasticizers such as epoxidated soybean oil or benzyl epoxystearate; polyester plasticizers obtained from dibasic acids such as sebacic acid, adipic acid, azelaic acid, or phthalic acid, and dihydric alcohols such as ethylene glycol, diethylene glycol, triethylene glycol, propylene glycol, or dipropylene glycol; and acrylic plasticizers. However, these plasticizers are not necessarily required. In addition, it is also possible to mix these plasticizers when a polymer is produced.

When a plasticizer is used, the amount used is not particularly limited. It is used at an amount between 5 and 150 parts by weight, preferably between 10 and 120 parts by weight, and more preferably between 20 and 100 parts by weight, with respect to 100 parts by weight of vinyl polymer. If the amount of a plasticizer used is less than 5 parts by weight, it does not exhibit the effects as a plasticizer. In contrast, if it exceeds 150 parts by weight, the mechanical strength of a cured product becomes insufficient.

### (Filler)

Various types of fillers are used for the curable composition of the present invention, as necessary. The type of a filler is not particularly limited. Examples of a filler may include: reinforcing fillers such as wood flour, pulp, cotton chip, asbestos, glass fiber, carbon fiber, mica, walnut coat powder, chaff powder, graphite, diatomaceous earth, clay, fumed silica, precipitated silica, crystalline silica, fused silica, dolomite, silicic acid anhydride, hydrous silicic acid, or carbon black; fillers such as heavy calcium carbonate, colloidal calcium carbonate, magnesium carbonate, diatomaceous earth, calcined clay, clay, talc, titanium oxide, bentonite, organic bentonite, ferric oxide, fine aluminum powder, flint powder, zinc oxide, active zinc oxide, zinc powder, or Shirasu balloon; and fiber fillers such as asbestos, glass fiber, or filament. Of these fillers, precipitated silica, fumed silica, crystalline silica, fused silica, dolomite, carbon black, calcium carbonate, titanium oxide, and talc are preferable. In particular, when a cured product with high strength is intended to be obtained using these fillers, fillers mainly selected from the group consisting of fumed silica, precipitated silica, silicic acid anhydride, hydrous silicic acid, carbon black, fine calcium carbonate formed by subjecting to surface treatment, crystalline silica, fused silica, calcined clay, clay, and active zinc oxide, can be added. Moreover, when a cured product with low strength and high elongation is intended to be obtained, fillers mainly selected from the group consisting of titanium oxide, calcium carbonate, talc, ferricoxide, zinc oxide, and Shirasu balloon, can be added. In general, when the specific surface area is small, calcium carbonate does not sufficiently exhibit the effect of improving the breaking strength, breaking elongation, adhesiveness, and weather-resistant adhesiveness of a cured product. The greater the value of the specific surface area is, the larger the effect of improving the breaking strength, breaking elongation, adhesiveness, and weather-resistant adhesiveness of a cured product that can be achieved. In addition, the surface of calcium carbonate is more preferably treated with a surface-treating agent. When such a surface-treated calcium carbonate is used, it is considered that it improves the workability of the composition of the present invention and has a greater effect of improving the adhesiveness and weather-resistance adhesiveness of the above curable composition than that of calcium carbonate the surface of which has not been treated. Examples of the aforementioned surface-treating agent may include: organic products such as fatty acid, fatty acid soap, or fatty acid ester; various types of surfactants; and various types of coupling agents such as a silane coupling agent or a titanate coupling agent. Specific examples of such a surface-treating agent may include, but are not limited to, fatty acids such as caproic acid, caprylic acid, pelargonic acid, capric acid, undecanoic acid, lauric acid, myristic acid, palmitic acid, stearic acid, behenic acid, or oleic acid; sodium or potassium salts of these fatty acids; and alkyl esters of these fatty acids. Specific examples of a surfactant may include: sulfate anionic surfactants such as polyoxyethylene alkylether sulfate, long chain alcohol sulfate, sodium salts thereof, or potassium salts thereof; and sulfonate anionic surfactants such as alkylbenzenesulfonic acid, alkylnaphthalenesulfonic acid, paraffin sulfonate, α-olefin sulfonate, alkylsulfosuccinic acid, sodium salts thereof, or potassium salts thereof. The amount of such a surface-treating agent used is preferably within a range between 0.1% and 20% by weight, and more preferably within a range between 1% and 5% by weight, with respect to 100% by weight of calcium carbonate. If the amount of a surface-treating agent used is less than 0.1% by weight, it does not sufficiently exhibit the effect of improving workability, adhesiveness, and weather-resistant adhesiveness. On the other hand, if it exceeds 20% by weight, the storage stability of the above curable composition may be decreased.

When a filler is used, such a filler added is preferably used within a range between 5 and 1,000 parts by weight, more preferably within a range between 20 and 500 parts by weight, and particularly preferably within a range between 40 and 300 parts by weight, with respect to 100 parts by weight of vinyl polymer. When the amount of a filler added is less than 5 parts by weight, it may not sufficiently exhibit the effect of improving the breaking strength, breaking elongation, adhesiveness, and weather-resistant adhesiveness of a cured product. On the other hand, when it exceeds 1,000 parts by weight, the workability of the above curable composition may be decreased. Such a filler may be used singly or in combination with two or more types.

### (Agent for regulating physical properties)

An agent for regulating physical properties which regulates the tensile properties of a cured product generated maybe added to the curable composition of the present invention, as necessary. The type of such an agent for regulating physical properties is not particularly limited. Examples of such an agent may include: alkylalkoxysilanes such as methyltrimethoxysilane, dimethyldimethoxysilane, trimethylmethoxysilane, or n-propyltrimethoxysilane; alkoxysilanes having a functional group, such as alkylisopropenoxysilanes including dimethyldiisopropenoxysilane, methyltriisopropenoxysilane, and γ-glycidoxypropylmethyldiisopropenoxysilane, γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, or γ-mercaptopropylmethyldimethoxysilane; silicon varnishes; and polysiloxanes. Using the aforementioned physical property regulators, when the composition of the present invention is cured, the hardness thereof can be increased, or can be decreased thereby obtaining elongation. The aforementioned physical property regulators may be used singly or in combination with two or more types.

In order to enhance the activity of a condensation catalyst, a silicon compound containing no silanol group which is represented by general formula (20) indicated below may be added to the curable composition of the present invention:

R⁴⁰ₐSi(OR⁴¹)₄₋ₐ (20)

wherein each of R⁴⁰ and R⁴¹ independently represents a substituted or unsubstituted hydrocarbon group containing 1 to 20 carbon atoms; and a represents 0, 1, 2, or 3.

The type of the aforementioned silicon compound is not particularly limited. Compounds wherein, in the general formula (20), R⁴⁰ represents an aryl group containing 6 to 20 carbon atoms, such as phenyltrimethoxysilane, phenylmethyldimethoxysilane, phenyldimethylmethoxysilane, diphenyldimethoxysilane, diphenyldiethoxysilane, or tirphenylmethoxysilane, are preferable because these compounds have a great effect of accelerating the curing reaction of the composition. In particular, diphenyldimethoxysilane and diphenyldiethoxysilane are most preferable because they are inexpensive and can easily be obtained.

Such a silicon compound is added at an amount preferably between approximately 0.01 and 20 parts, and more preferably between 0.1 and 10 parts, with respect to 100 parts of vinyl polymer having at least one crosslinkable silyl group. The amount of a silicon compound added is below the above range, the effect of accelerating the curing reaction may be reduced in some cases. On the other hand, if the amount of a silicon compound added exceeds the above range, the hardness or tensile strength of a cured product may be decreased.

### (Thixotropic agent)

A thixotropic agent (anti-sagging agent) for preventing sagging thereby improving workability may be added to the curable composition of the present invention, as necessary.

The type of an anti-sagging agent is not particularly limited. Examples of such an anti-sagging agent may include: polyamide waxes; hydrogenated castor oil derivatives; and metallic soaps such as calcium stearate, aluminum stearate, or barium stearate. These thixotropic agents (anti-sagging agents) may be used singly or in combination with two or more types.

### (Antioxidant)

Various types of additives may be added to the curable composition of the present invention for the purpose of regulating the physical properties of the curable composition or a cured product to be obtained, as necessary. Examples of such an additive may include a fire retardant, a hardness regulator, an antioxidant, a radical inhibitor, an ultraviolet absorber, a metal.deactivator, an antiozonant, a light stabilizer, a phosphorous peroxide-decomposing agent, a lubricant, a pigment, a foaming agent, and a light-curing resin. These additives may be used singly or in combination with two or more types.

Specific examples of such an additive are described in the specifications of Japanese Patent Publication Nos. 4-69659 and 7-108928 and in Japanese Patent Laid-Open Nos. 63-254149 and 64-22904.

### Polymer blend

Other curable polymers may be blended with the curable composition of the present invention. The curing mechanism of a curable polymer to be blended may be epoxy curing, urethane curing, hydrosilylation curing, or radical curing, which are different from condensation curing with a crosslinkable silyl group contained in a polymer used as component (I) of the present invention. However, the same condensation curing is preferable.

The type of a curable polymer is not limited. Examples of such a curable polymer may include a silicon polymer, a polyisobutylene polymer, a urethane polymer, and a polyether polymer. In terms of compatibility with the polymer used as component (I) of the present invention, physical properties, or the like, a polyether polymer is preferable.

A polyether polymer having a crosslinkable functional group that is preferably blended with the curable composition of the present invention will be described below.

A polyether polymer having at least one crosslinkable silyl group may or may not contain a urethane bond or a urea bond in a main chain thereof. The main chain of such a polyether polymer is not particularly limited. Examples of such a main chain may include polyethylene oxide, polypropylene oxide, polybutylene oxide, and polyphenylene oxide. Of these, polyoxyalkylene is substantially preferable, and polypropylene oxide is substantially more preferable. It may also contain ethylene oxide, butylene oxide, phenylene oxide, or the like, as well as propylene oxide. The expression "the main chain is substantially polypropylene oxide" is used to mean that propylene oxide units make up 50% or more, preferably 70% or more, and more preferably 90% or more of repeating units that constitute the main chain. The lower the viscosity, the better the handlability that can be obtained. Thus, a polypropylene oxide polymer having a molecular weight distribution (Mw/Mn) of 1.5 or less is more preferable.

The type of a crosslinkable functional group is not particularly limited. Preferred examples may include a crosslinkable silyl group, an alkenyl group, a hydroxyl group, an amino group, a group having a polymerizable carbon-carbon double bond, and an epoxy group. A crosslinkable silyl group is particularly preferable.

The structure of a crosslinkable silyl group varies widely. It may be either identical to, or different from the structure of the polymer used as component (I) of the present invention. In addition, the number of crosslinkable functional groups contained in a polyether polymer is at least one on average. However, from the viewpoint of the curing properties of the composition, the number of crosslinkable functional groups is preferably more than 1, more preferably 1.1 to 4.0 on average, and further more preferably 1. 5 to 2.5 on average. Moreover, such a crosslinkable functional group is preferably located at the terminus of a polyether polymer in terms of the rubber elasticity of a cured product. More preferably, functional groups are located at both termini of the polymer.

A method for producing a polyether polymer is not particularly limited. Previously known methods may be applied.

When a polyether polymer having at least one crosslinkable functional group that is used as component (I) of the present invention contains a urethane bond or urea bond in the main chain thereof, any production method can be applied to obtain such an organic polymer, as long as the produced polyether polymer contains at least one urethane bond or urea bond in a molecule thereof and has at least one crosslinkable functional group. The type of a crosslinkable functional group is not particularly limited. Various types of functional groups as described above can be used. Among them,

a silicon-containing group represented by the following general formula (21) is preferable:

-SiYₐR⁵¹₃₋ₐ (21)

wherein R⁵¹ represents an alkyl group containing 1 to 20 carbon atoms, an aryl group containing 6 to 20 carbon atoms, an aralkyl group containing 7 to 20 carbon atoms, or a triorganosiloxy group represented by R'₃SiO-, wherein R' represents a monovalent hydrocarbon group containing 1 to 20 carbon atoms, and three R' s may be identical to or different from one another, and when two or more R¹s exist, these may be identical to or different from one another; Y represents a hydroxyl group or a hydrolyzable group, and when two or more Ys exist, these may be identical to or different from one another; and a represents 0, 1, 2, or 3. An example of a method for industrially easily produce a polyether polymer may be a method of producing a polyether polymer, which comprises: allowing an excessive polyisocyanate compound (E) to react with a hydroxyl group located at the terminus of an oxyalkylene polymer (D) having the hydroxyl group at the terminus, so as to obtain a polymer having an isocyanate group at the terminus of a polyurethane main chain (F); and thereafter or at the same time, allowing the W group of a silicon compound (G) represented by general formula (22) indicated below to react with the above isocyanate group:

W-R⁵²-SiYₐR⁵¹₃₋ₐ (22)

wherein R⁵¹, Y, and a have the same meanings as described above, R⁵² represents a substituted or unsubstituted divalent organic group containing 1 to 20 carbon atoms; and W represents an active hydrogen-containing group selected from the group consisting of a hydroxyl group, a carboxyl group, a mercapto group, and an amino group (primary or secondary). Another example may be a method of allowing a hydrolyzable silicon-containing isocyanate compound (H) represented by general formula (23) indicated below to react with the oxyalkylene polymer (D) having a hydroxyl group at the terminus:

O=C=N-R⁵²-SiYₐR⁵¹₃₋ₐ (23)

wherein R⁵¹, R⁵², Y, and a have the same meanings as described above.

A method for producing the oxyalkylene polymer (D) is not particularly limited, and any type of oxyalkylene polymer can be used. A preferred example is an oxyalkylene polymer containing at the terminus thereof at least 0.7 hydroxyl groups per molecular terminus on average of all the molecules. Specific examples of such an oxyalkylene polymer may include: an oxyalkylene polymer produced using a conventional alkali metal catalyst; and an oxyalkylene polymerproducedby allowing alkylene oxide to react with a polyhydroxy compound having at least two hydroxyl groups used as an initiator in the presence of a composite metal-cyanide complex (C) or secium.

Among the aforementioned methods, the use of the composite metal-cyanide complex (C) enables the production of an oxyalkylene polymer (D) having a lower unsaturation degree, higher molecular weight, narrower Mw/Mn, lower viscosity, higher acid resistance, and higher weather resistance, than those of an oxyalkylene polymer produced by the conventional alkali metal catalyst. Thus, the use of the composite metal-cyanide complex is preferable.

A complex having zinc hexacyanocobaltate as a main component is preferably used as such a composite metal-cyanide complex (C) , and its ether and/or alcohol complex is preferable. The composition described in Japanese Patent Publication No. 46-27250 can substantially be used. Preferred examples of such ether may include glimes such as tetrahydrofuran, glime, or diglime. Of these, tetrahydrofuran and glime are more preferable because the oxyalkylene polymer (D) having narrow Mw/Mn and a low unsaturation degree can be obtained using these substances. As alcohol, t-butanol described in Japanese Patent Laid-Open No. 4-145123 is preferable because the oxyalkylene polymer (D) having a low unsaturation degree can be obtained using this substance.

In order to obtain a polymer with a high molecular weight as a result of the reaction of the oxyalkylene polymer (D) with the polyisocyanate compound (E), and also to enhance the rate of introducing a silyl group due to the reaction of the oxyalkylene polymer (D) with the hydrolyzable silicon-containing isocyanate compound (H), the number of hydroxyl groups contained in the oxyalkylene polymer (D) is preferably 1.6 or more, and particularly preferably between 1.8 and 4, per molecule on average of all the molecules. In order to prevent the occurrence of gelation during the reaction with the polyisocyanate compound (E), the number of hydroxyl groups is further more preferable between 1.8 and 3. In addition, the oxyalkylene polymer (D) having two or more hydroxyl groups can be produced using an initiator having three or more functional groups instead of a part of or the entire initiator having two functional groups. It is also possible to obtain the oxyalkylene polymer (D) having 1.8 to 3 hydroxyl groups per molecule on average of all the molecules by mixing the obtained oxyalkylene polymer having two or more functional groups with an oxyalkylene polymer having two or less functional groups.

Specific examples of such an oxyalkylene polymer (D) may include a polyoxyethylene compound, a polyoxypropylene compound, a polyoxybutylene compound, a polyoxyhexylene compound, a polyoxytetramethylene compound, and/or a copolymer thereof.

Particularly preferred examples of such an oxyalkylene polymer (D) may be polyoxypropylene diol, polyoxypropylene triol, polyoxypropylene tetraol, a copolymer of these polymers and ethylene oxide, and a mixture thereof.

In order to facilitate the reaction of the oxyalkylene polymer (D) with the polyisocyanate compound (E) or the hydrolyzable silicon-containing isocyanate compound (H), it is preferable that an oxyalkylene polymer be copolymerized with ethylene oxide, so that a hydroxyl group at the terminus thereof becomes primary.

The number average molecular weight of the oxyalkylene polymer (D) can be 1,000 or greater. If it is less than 4, 000, the number of urethane bonds introduced into the polyurethane main chain (F) increases, and the viscosity becomes relatively high. Thus, the oxyalkylene polymer (D) having a number average molecular weight of 4,000 or greater is preferably used.

Any polyisocyanate compound can be used as such a polyisocyanate compound (E) used to obtain the polyurethane main chain (F) in the present invention.

The number of isocyanate groups contained in the polyisocyanate compound (E) is preferably between 2 and 5 per molecule on average. It is more preferably between 2 and 3 in terms of easy procurement. Moreover, in order to prevent the occurrence of gelation during the reaction of the polyisocyanate compound (E) with the oxyalkylene polymer (D), the number of isocyanate groups is most preferably 2.

Specific examples of such a polyisocyanate compound (E) may include tolylene diisocyanate (TDI), methylene diisocyanate (MDI), xylene diisocyanate (XDI), isophorone diisocyanate (IPDI), hexamethylene diisocyanate (HMDI), and tetramethylene diisocyanate (TMDI). Moreover, their urethodione derivatives, isocyanurate derivatives, cyanurate derivatives, and carbodiimide derivatives can also be used.

Specific examples of the silicon compound (G) represented by the general formula (22) that is used to introduce the silicon-containing group represented by the general formula (21) into a molecule of a polyether polymer may include: amino group-substituted alkoxysilanes such as γ-aminopropyltrimethoxysilane, γ-aminopropyltriethoxysilane, γ-aminopropylmethyldimethoxysilane, N-(β-aminoethyl)-γ-aminopropyltrimethoxysilane, N-(β-aminoethyl)-γ-aminopropyltriethoxysilane, N-(β-aminoethyl)-γ-aminopropylmethyldimethoxysilane, 1,3-diaminoisopropyltrimethoxysilane; γ-hydroxypropyltrimethoxysilane; and γ-mercaptopropyltrimethoxysilane.

Specific examples of the silicon group-containing isocyanate compound (H) represented by the general formula (23) that is used to introduce the silicon-containing group represented by the general formula (21) into a molecule of a polyether polymer may include γ-trimethoxysilylpropyl isocyanate, γ-triethoxysilylpropyl isocyanate, γ-methyldimethoxysilylpropyl isocyanate, and γ-methyldiethoxysilylpropyl isocyanate.

Catalysts can be used for the reaction of a hydroxyl group contained in the oxyalkylene polymer (D) with an isocyanate group, and for the reaction of a W group contained in a silicon compound with an isocyanate group. However, when the storage stability of the obtained polyether polymer deteriorates, these reactions are preferably carried out in the absence of a catalyst. When a catalyst is used, any known catalysts can be used, as long as such catalysts catalyze the reaction between a hydroxyl group and an isocyanate group.

Among the polyether polymers having at least one crosslinkable functional group of the present invention, a polyether polymer containing a urethane bond or urea bond in a main chain thereof preferably has a number average molecular weight of 7, 500 or greater. An organic polymer having a number average molecular weight between 7,500 and 25,000 is particularly preferably used. When the number average molecular weight of a polyether polymer is less than 7,500, the obtained cured product is hard, having low elongation. In contrast, when the number average molecular weight exceeds 25,000, there are no problems regarding the flexibility and elongation of the obtained cured product. However, the adhesiveness of the above polymer itself significantly decreases, resulting in low practicality. Thus, the number average molecular weight is particularly preferably between 8,000 and 20,000 in terms of viscosity.

The mixing ratio of the vinyl polymer (I) to the polyether polymer is preferably within a range between 100/1 and 1/100, more preferably within a range between 100/5 and 5/100, and further more preferably within a range between 100/10 and 10/100, at weight ratio. If the ratio of the vinyl polymer (I) blended is small, there is a case where excellent weather resistance is hardly exhibited.

### Storage stability

With regard to compositions similar to the curable composition of the present invention, it is not preferable that the curing rate after a long-term storage is largely changed from that before storage. For example, when the composition is used as a sealant, it is subjected to operations of adjusting the surface form after application to a joint or of applying a finishing material or coating material. Thus, a change in the time when the surface is cured, that is, what is called skinning time, impairs such operations.

Storage conditions for confirming the effects of the present invention are not particularly limited. In general, a change in storage hardly occurs at a low temperature. The storage temperature becomes considerably high in summer. In order to quickly evaluate storage stability, the temperature is preferably set between a room temperature and 80°C. The evaluation was carried out at 50°C in the examples of the present invention.

The present invention further relates to a sealant, a liquid gasket, and an adhesive, for which the curable composition of the present invention is used. The curable composition in the present invention has improved storage stability. Thus, it is preferably used for a sealant, a liquid gasket, and an adhesive.

More detailed uses regarding the aforementioned use of the curable composition of the present invention, and other uses, are not limited. The curable composition of the present invention can be used for a variety of purposes, which include: electric and electronic components (sealants used for the circuits or substrates of heavy electric components, light electric components, and electric or electronic devices (sealant used for a refrigerator, a freezer, a washing machine, agasmeter, amicrowave, asteamiron, or a ground fault breaker), potting materials (potting of a transformer high pressure circuit, a printed circuit board, a transformer for high voltage equipped with a variable resistor, an electrical insulating component, a semiconductive component, a conductive component, a solar battery, or a flyback transformer for television), coating materials (coating of a circuit element of a thick-film resistor for high voltage or hybrid IC; HIC; an electrical insulating component; a semiconductive component; a conductive component; amodule; a printed circuit; a ceramic substrate; a buffer material used for diode, transistors, or bonding wires; a semiconductive element; or an optical fiber used for optical communication) ; or adhesives (adhesion of a cathode ray tube wedge, a neck, an electrical insulating component, a semiconductive component, or a conducive component); or a repairing material for coating electric wires; an insulation sealant for electric wire-jointing components; a roll for office automation devices; avibrationdampener; or gel or condenser), automotive parts (sealants used for the gasket, electrical components, or oil filter of an automotive engine; potting materials used for igniter HIC or automotive hybrid IC; coating materials used for an automotive body, an automotive window, or an engine control substrate; or adhesives used for the gasket of an oil pan, the gasket of a timing belt cover, molding, a headlamp lens, a sunroof seal, or a mirror; a fuel injector, a fuel heater, an air damper, a pressuresensor, an oil cooler of a resin tank for heat exchanger, a variable compression ratio engine, a cylinder device, a regulator for compressed natural gas, a pressure vessel, a fuel-supplying system of a direct-injection internal combustion engine, or an O-ring for high pressure pump), watercrafts (sealants used for a wire connecting or dividing box, an electrical system component, or an electric wire) ; or adhesives used for an electric wire or glass), aircrafts, railroad vehicles, civil engineering and construction (sealants for construction materials, which are used for a joint used in the glass screen method for commercial buildings, a joint between sash and glass, inner packaging joints in toilet, lavatory, or showcase, a joint around bathtub, an expansion joint of the outer wall of a prefabricated house, or a sealant used for a joint of a sizing board; sealants used for double-grazed glass; sealants for engineering, which are used for repairing roads; coating agents and adhesives used for metal, glass, stone, slate, concrete, or tile; or adhesive sheets, waterproof sheets, or vibration-proof sheets), medical products (sealants used for a medical rubber stopper, a syringe gasket, or a rubber stopper for decompressed blood vessel), or leisure items (swimming materials used for a swimming cap, a diving mask, or an earplug; or gel buffer materials used for sports shoes or a baseball glove), etc. Because of its properties, the curable composition of the present invention is preferably applied to liquid sealing agents, which are used for automotive parts, O-rings, electric components, various types of mechanical components, etc., but the usage thereof is not particularly limited thereto.

Preferably, in the present invention, the polymer (I), which has at least one crosslinkable functional group at the terminus and also has a vinyl polymer as a main chain thereof, is such that 2% to 80% by weight of monomers based on the total monomers constituting the main chain is methyl acrylate. Preferably, 5% to 50% by weight of monomers based on the total monomers constituting the main chain is methyl acrylate. More preferably, 5% to 20% by weight of monomers based on the total monomers constituting the main chain is methyl acrylate.

In another preferred embodiment of the present invention, the polymer (I), which has at least one crosslinkable functional group at the terminus and also has a vinyl polymer as a main chain thereof, is such that 2% to 50% by weight of monomers basedon the total monomers constituting the main chain is methyl methacrylate. Preferably, 2% to 20% by weight of monomers based on the total monomers constituting the main chain is methyl methacrylate.

The vinyl polymer as a main chain of the aforementioned polymer (I) is preferably a (meth)acrylic polymer.

A method for polymerizing these polymers is not limited. A polymerization method described above is preferable.

These polymers are suitably used as component (I) of the curable composition in the present invention. They exhibit the effect of improving strength in the mechanical properties of a cured product, or the like.

The crosslinkable functional group of the present invention is a crosslinkable silyl group.

In another aspect, the present invention relates to a curable composition with improved storage stability, which comprises an aminosilane and the following two components as essential components:
a vinyl polymer (I) having at least one crosslinkable silyl group represented by the above described general formula (1) ; and
a compound (II) having a methyl ester group other than the compound (I).

The crosslinkable silyl group represented by the general formula (1) is as set out for component (I) of the curable composition hereinabove. The number of crosslinkable functional groups is also as set out for component (I) of the curable composition hereinabove.

In addition, the crosslinkable silyl group represented by the general formula (1) is preferably located at the terminus of a vinyl polymer.

### Vinyl monomer constituting vinyl polymer

In terms of the physical properties of a product to be obtained or the like, a vinyl monomer constituting the main chain of a vinyl polymer preferably comprises, as main components, alkyl (meth)acrylate and/or alkoxyalkyl (meth)acrylate.

Examples of alkyl (meth)acrylate may include ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth) acrylate, decyl (meth) acrylate, dodecyl (meth) acrylate, and stearyl (meth)acrylate. Of these, ethyl acrylate, butyl acrylate, isobutyl acrylate, and 2-ethylhexyl acrylate are preferable. Ethyl acrylate and butyl acrylate are particularly preferable.

Examples of alkoxyalkyl (meth)acrylate may include 2-methoxyethyl (meth)acrylate, 2-ethoxyethyl (meth)acrylate, and3-methoxybutyl (meth)acrylate. Of these, 2-methoxyethyl acrylate and 2-ethoxyethyl (meth)acrylate are particularly preferable.

In order to control physical properties, in addition to alkyl (meth)acrylate and alkoxyalkyl (meth)acrylate, the following vinyl monomers may also be copolymerized. Examples of a vinyl monomer capable of being copolymerized may include: (meth)acrylic monomers such as (meth)acrylic acid, phenyl (meth) acrylate, toluyl (meth) acrylate, benzyl (meth) acrylate, 2-hydroxyethyl (meth)acrylate, 2-hydroxypropyl (meth)acrylate, glycidyl (meth)acrylate, 2-aminoethyl (meth)acrylate, γ-(methacryloyloxypropyl)trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, or 2-perfluorohexadecylethyl (meth)acrylate; styrene monomers such as styrene, vinyltoluene, α-methylstyrene, chlorstyrene, or styrene sulfonate and a salt thereof; fluorine-containing vinyl monomers such as perfluoroethylene, perfluoropropylene, or vinylidene fluoride; silicon-containing vinyl monomers such as vinyltrimethoxysilane or vinyltriethoxysilane; maleic anhydride, maleic acid, and a monoalkyl ester and a dialkyl ester of maleic acid; fumaric acid, and a monoalkyl ester and a dialkyl ester of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, or cyclohexylmaleimide; nitrile-containing vinyl monomers such as acrylonitrile or methacrylonitrile; amide group-containing vinyl monomers such as acrylamide or methacrylamide; vinyl esters such as vinyl acetate, vinyl propionate, vinyl pivalate, vinyl benzoate, or vinyl cinnamate; alkenes such as ethylene or propylene; conjugated dienes such as butadiene or isoprene; and vinyl chloride, vinylidene chloride, allyl chloride, and allyl alcohol.

Properties such as oil resistance, heat resistance, or cold resistance can be controlled by changing the composition ratio of alkyl (meth)acrylate and/or alkoxyalkyl (meth) acrylate, which are the main constituent units of a vinyl polymer.

For example, in order to obtain a cured product having a well balance of rubber elasticity, oil resistance, heat resistance, cold resistance, surface tackiness, and surface staining properties, a vinyl polymer preferably comprises alkyl acrylate at a weight ratio between 60% and 80% based on the total weight of vinyl monomers constituting the vinyl polymer and alkoxyalkyl acrylate at a weight ratio between 20% and 40% based on the total weight of vinyl monomers constituting the vinyl polymer. In this case, a vinyl polymer, which comprises ethyl acrylate at a weight ratio between 30% and 50% based on the total weight of vinyl monomers, butyl acrylate at a weight ratio between 20% and 40% based on the total weight of vinyl monomers, and 2-methoxyethyl acrylate at a weight ratio between 20% and 40% based on the total weight of vinyl monomers, is well balanced. A vinyl polymer, which comprises ethyl acrylate at a weight ratio between 50% and 80%, butyl acrylate at a weight ratio between 0% and 20%, and 2-methoxyethyl acrylate at a weight ratio between 20% and 40%, is more excellent in terms of oil resistance. In addition, a vinyl polymer, which comprises ethyl acrylate at a weight ratio between 0% and 30%, butyl acrylate at a weight ratio between 40% and 80%, and 2-methoxyethyl acrylate at a weight ratio between 20% and 40%, is more excellent in terms of cold resistance.

When oil resistance and cold resistance are particularly emphasized, a vinyl polymer preferably comprises alkyl acrylate at a weight ratio between 20% and 60% based on the total weight of vinyl monomers constituting the vinyl polymer, and alkoxyalkyl acrylate at a weight ratio between 40% and 80% based on the total weight of vinyl monomers constituting the vinyl polymer. In this case, when a vinyl polymer comprises ethyl acrylate and butyl acrylate whose total weight is between 20% and 60% at a weight ratio based on the total vinyl monomers constituting the vinyl polymer, and 2-methoxyethyl acrylate at a weight ratio between 40% and 80% based on the total vinyl monomers constituting the vinyl polymer, it is more excellent in terms of oil resistance and cold resistance. Thus, such a vinyl polymer is more preferable. When a vinyl polymer comprises ethyl acrylate at a weight ratio between 10% and 30% based on the total weight of vinyl monomers constituting the vinyl polymer, butyl acrylate at a weight ratio between 10% and 30% based on the total weight of vinyl monomers constituting the vinyl polymer, and 2-methoxyethyl acrylate at a weight ratio between 40% and 80% based on the total weight of vinyl monomers constituting the vinyl polymer, it is excellent in terms of oil resistance and cold resistance. When a vinyl polymer comprises ethyl acrylate at a weight ratio between 0% and 10% based on the total weight of vinyl monomers constituting the vinyl polymer, butyl acrylate at a weight ratio between 30% and 60% based on the total weight of vinyl monomers constituting the vinyl polymer, and 2-methoxyethyl acrylate at a weight ratio between 40% and 80% based on the total weight of vinyl monomers constituting the vinyl polymer, it is particularly excellent in terms of cold resistance. When a vinyl polymer comprises ethyl acrylate at a weight ratio between 30% and 60% based on the total weight of vinyl monomers constituting the vinyl polymer, butyl acrylate at a weight ratio between 0% and 10% based on the total weight of vinyl monomers constituting the vinyl polymer, and 2-methoxyethyl acrylate at a weight ratio between 40% and 80% based on the total weight of vinyl monomers constituting the vinyl polymer, it is excellent in terms of oil resistance and cold resistance.

When oil resistance and heat resistance are particularly emphasized, a vinyl polymer preferably comprises alkyl acrylate at a weight ratio between 80% and 100% based on the total weight of vinyl monomers constituting the vinyl polymer, and alkoxyalkyl acrylate at a weight ratio between 0% and 20% based on the total weight of vinyl monomers constituting the vinyl polymer. In this case, when a vinyl polymer comprises ethyl acrylate at a weight ratio between 40% and 60% based on the total weight of vinyl monomers constituting the vinyl polymer, butyl acrylate at a weight ratio between 40% and 60% based on the total weight of vinyl monomers constituting the vinyl polymer, and 2-methoxyethyl acrylate at a weight ratio between 1% and 20% based on the total vinyl monomers constituting the vinyl polymer, it is excellent in terms of rubber elasticity, as well as oil resistance and heat resistance. When a vinyl polymer comprises ethyl acrylate at a weight ratio between 60% and 100% based on the total weight of vinyl monomers constituting the vinyl polymer, butyl acrylate at a weight ratio between 0% and 40% based on the total weight of vinyl monomers constituting the vinyl polymer, and 2-methoxyethyl acrylate at a weight ratio between 0% and 20% based on the total weight of vinyl monomers constituting the vinyl polymer, it is excellent in terms of oil resistance, heat resistance, surface tackiness, and surface staining properties. When a vinyl polymer comprises ethyl acrylate at a weight ratio between 0% and 40% based on the total weight of vinyl monomers constituting the vinyl polymer, butyl acrylate at a weight ratio between 60% and 100% based on the total weight of vinyl monomers constituting the vinyl polymer, and 2-methoxyethyl acrylate at a weight ratio between 0% and 20% based on the total weight of vinyl monomers constituting the vinyl polymer, it is excellent in terms of oil resistance, heat resistance, and rubber elasticity.

The molecular weight and molecular weight distribution of the vinyl polymer are as set out for component (I) of the curable composition hereinabove.

The method for polymerizing the vinyl polymer is not limited, but the same method as applied to component (I) of the curable composition as set out hereinabove is applied.

The method for introducing a crosslinkable silyl group into the vinyl polymer is not limited either, but the same method as applied to component (I) of the curable composition as set out hereinabove is applied.

### Compound (II) having methyl ester group other than compound (I)

The compound having a methyl ester group other than the compound (I) in the present invention is not particularly limited. Either a compound other than a polymer, or a polymer can be used.

The structure of the compound having a methyl ester group other than the compound (I) is not particularly limited. Thecarbon atom at the α-position of the methyl ester group which is contained in the above compound containing a methyl ester group other than the compound (I) is preferably primary or secondary, since the compound with such a structure has a great effect of suppressing delay in curing.

When the compound having a methyl ester group other than the compound (I) is not a polymer, it is preferably a dimethyl ester of dicarboxylic acid, but is not limited thereto. This is because it exhibits high effects because of a high methyl ester concentration per weight of the compound and also because volatilization hardly occurs.

When the compound having a methyl ester group other than the compound (I) is not a polymer, such a compound is not limited to, but is preferably selected from the group consisting of: dimethyl malonate, dimethyl succinate, dimethyl glutarate, dimethyl adipate, dimethyl sebacate, methyl acetate, methyl propionate, methyl butyrate, methyl valerate, methyl caprylate, methyl caprate, methyl laurate, methyl myristate, methyl palmitate, methyl stearate, methyl oleate, methyl ricinoleate, and coconut fatty acid methyl ester.

These compounds may be used either singly or in combination.

When the compound having a methyl ester group other than the compound (I) is a polymer, the structure thereof is not particularly limited. A polymer containing a monomer having a methyl ester group as a constituent unit is preferable. The monomer having a methyl ester group is not particularly limited, but it is preferably methyl acrylate.

When the compound having a methyl ester group other than the compound (I) is a copolymer containing a monomer having a methyl ester group as a constituent, with regard to ester groups contained in monomers other than the monomer having a methyl ester group, alkoxy groups thereof are not particularly limited. However, ester groups, which are primary and contain 5 or more carbon atoms, preferably make up 80% or less at a molar ratio with respect to the methyl ester groups.

When the compound having a methyl ester group other than the compound (I) is a copolymer containing a monomer having a methyl ester group as a constituent, with regard to ester groups contained in monomers other than the monomer having a methyl ester group, alkoxy groups thereof are not particularly limited. However, ester groups, which are primary and contain 2 to 4 carbon atoms, preferably make up 400% or less at a molar ratio with respect to the methyl ester groups.

Delay in curing, which is a problem to be solved by the present patent, is largely influenced by ester groups other than methyl ester groups. The larger the molecular weight of alkoxy groups of the ester groups, the greater the influence that can be obtained. It is likely that the effect of suppressing delay in curing obtained by addition of the compound having a methyl ester group other than the compound (I) is changed due to the ratio of methyl ester groups to other ester groups. As the ratio of such methyl ester groups increases, the greater effect can be obtained. Even if the compound having a methyl ester group is added, when the ratio of such methyl ester groups is low, the effect cannot sufficiently be exhibited.

Accordingly, the additive amount of the compound (II) in the present invention having methyl ester group other than the compound (I) is not limited, but in order to exhibit the effect of suppressing delay in curing, the additive amount is preferably large. However, if it is too large, the viscosity of the mixture or the physical properties of the cured product may be deteriorated. Thus, it is preferable to add an appropriate amount of the compound (II) depending on the purpose.

When the compound having a methyl ester group is a polymer, a method for synthesizing such a polymer is not limited. Various polymerization methods that have already been known are used. When the monomer having a methyl ester group is a radical polymerizable monomer, in order to synthesize such a monomer, various types of radical polymerization methods may be applied. Examples of representative methods may include: general free radical polymerization; free radical polymerization using a chain transfer agent; high-temperature high-pressure continuous polymerization (described in National Publication of International Patent Application No. 57-502171, Japanese Patent Laid-Open Nos. 59-6207 and 60-215007, National Publication of International Patent Application No. 10-511992, etc.); and atom transfer radical polymerization described in the section regarding a method of synthesizing the polymer used as component (I) of the present patent.

### <Curable composition>

Similar substances to those added to the curable composition described hereinabove can be added to the curable composition in this other aspect of the present invention.

### Mixed material

For a curable composition comprising a polymer having a crosslinkable silyl group, a curing catalyst or a silane coupling agent is often mixed. Decrease in storage stability, which is a problem to be solved by the present invention, of ten occurs in a case where such a curing catalyst or silane coupling agent is mixed. Thus, in order to sufficiently obtain the effects of the present invention, a mixture containing these components is preferable. In addition, various types of additives may be added, depending on physical properties of interest.

### Condensation catalyst

The condensation catalyst used in this aspect of the present invention is similar to the condensation catalyst used as described hereinabove.

### Amine compound

The amine compound used as component (III) in this aspect of the present invention is similar to the amine compound used as component (III) as described hereinabove.

### Silane coupling agent

The silane coupling agent that is one of the amine compounds used as component (III) in this aspect of the present invention is similar to the silane coupling agent that is one of amine compounds used as component (III) as described hereinabove.

Mixed materials other than such a silane coupling agent are not particularly limited. Examples of other mixed materials may include epoxy resin, phenol resin, sulfur, alkyl titanate, and aromatic polyisocyanate.

Agents for imparting adhesiveness to compositions, such as a silane coupling agent, may be used singly or in combination with two or more types. Adhesiveness to a material to be adhered can be improved by adding these adhesiveness-imparting agents. In order to improve adhesiveness, and particularly adhesiveness to the surface of metal such as oil pan, among the aforementioned adhesiveness-imparting agents, a silane coupling agent is preferably used within a range between 0.1 and 20 parts by weight, although it is not particularly limited.

To the curable composition in this aspect of the present invention, a plasticizer, a filler, a physical property regulator, a thixotropic agent, an antioxidant, or the like, which are similar to those in the case of the curable composition as described hereinabove, can be added.

The polymer blend in the curable composition in this aspect of the present invention is similar to that in the curable composition as described hereinabove.

### Storage stability

With regard to compositions similar to the curable composition in this aspect of the present invention, it is not preferable that the curing rate after a long-term storage is largely changed from that before the storage. For example, when the composition is used as a sealant, it is subjected to operations of adjusting the surface form after application to a joint or applying a finishing material or coating material. Thus, a change in the time when the surface is cured, that is, what is called skinning time, impairs such operations.

Storage conditions for confirming the effects of the present invention are not particularly limited. In general, a change in storage hardly occurs at a low temperature. The storage temperature becomes considerably high in summer. In order to quickly evaluate storage stability, the temperature is preferably set between a room temperature and 80°C . The evaluation was carried out at 50°C in the examples of the present invention.

The present invention further relates to a sealant, a liquid gasket, and an adhesive, for which the curable composition in the above other aspect of the present invention is used.

The curable composition in the above other aspect of the present invention has improved storage stability. Thus, it is preferably used for a sealant, a liquid gasket, and an adhesive.

More detailed uses regarding the aforementioned use of the curable composition in the above other aspect of the present invention, and other uses, are the same as those described hereinabove.

### [Examples]

The present invention will be further specifically described below in examples and comparative examples. However, these examples are not intended to limit the present invention.

In the examples and comparative examples given below, the terms "part" and "%" mean "part by weight" and "% by weight," respectively.

In the examples given below, "number average molecular weight" and "molecular weight distribution (the ratio of the weight average molecular weight to the number average molecular weight)" were calculated as standard polystyrene-reduced values, using gel permeation chromatography (GPC). A column filled with crosslinked polystyrene gel (Shodex GPC K-804; manufactured by Showa Denko K.K.) was used as a GPC column, and chloroform was used as a GPC solvent.

### (Example 1) BA/MA copolymer [Synthesis Example]

3.67g (25.6 mmol) of copper (I) bromide and 46 ml of acetonitrile were added to a 1-liter flask, and the mixture was stirred under heating in a nitrogen current at 70°C for 20 minutes. Thereafter, 9.59 g (26.6 mmol) of diethyl 2,5-dibromoadipate, 425 ml (2.96 mol) of butyl arylate, and 41 ml (0.44 mol) of methyl acrylate were added to there action product, and the obtained mixture was further stirred under heating at 80°C for 20 minutes. Thereafter, 0.444 ml (2.56mmol) of pentamethyldiethylenetriamine (hereinafter referred to as triamine) was added to the reaction product, so as to initiate the reaction. Then, 0.178 ml (0.85 mmol) of triamine was further added thereto. The mixture was continuously stirred under heating at 80°C, and during the reaction, 0.178 ml (0.85 mmol) of triamine was added. 180 minutes after initiation of the reaction, the pressure in the reactor was reduced, so as to eliminate volatile substances. 240 minutes after initiation of the reaction, 140 ml of acetonitrile, 53 ml (0.43 mol) of 1,7-octadiene, and 1.78 ml (8.52 mmol) of triamine were added to the reaction product, and the thus obtained mixture was continuously stirred under heating at 80°C. 620 minutes after initiation of the reaction, the heating operation was terminated. The reaction solution was heated under a reduced pressure, so as to eliminate volatile substances, thereby obtaining a polymer. The obtained polymer, Kyoward 500 SH (Kyowa Chemical Co., Ltd.; 2 parts by weight with respect to 100 parts by weight of the polymer) , and Kyoward 700 SL (Kyowa Chemical Co., Ltd.; 2 parts by weight with respect to 100 parts by weight of the polymer) were mixed with xylene (100 parts by weight with respect to 100 parts by weight of the polymer). The obtained mixture was stirred at 130°C. Three hours later, aluminum silicate was filtrated, and volatile substances were distilled away from the filtrate by heating under a reduced pressure. The polymer was heated under a reduced pressure at 180°C for 12 hour, so as to distill away volatile substances. The obtained polymer, Kyoward 500 SH (Kyowa Chemical Co., Ltd.; 3 parts by weight with respect to 100 parts by weight of the polymer), and Kyoward 700 SL (Kyowa Chemical Co., Ltd.; 3 parts by weight with respect to 100 parts by weight of the polymer) were mixed with xylene (100 parts by weight with respect to 100 parts by weight of the polymer). The obtained mixture was stirred at 130°C. Five hours later, aluminum silicate was filtrated. Volatile substances were then distilled away from the filtrate by heating under a reduced pressure, so as to obtain a polymer [1] having an alkenyl group at the terminus.

The number average molecular weight of the polymer [1] was found to be 19, 000, and the molecular weight distribution thereof was found to be 1.2. The average number of alkenyl groups per molecule that had been introduced into the polymer was obtained by ¹H-NMR analysis. As a result, it was found to be 2.0.

Subsequently, the above described polymer [1] (350.0 g), dimethoxymethylhydrosilane (13.25 ml, 107.4 mmol), dimethyl orthoformate (3.92 ml, 35.8 mmol), and a platinum catalyst were added to a 500-ml pressure-resistant glass reactor. The amount of the platinum catalyst used was set to 2 x 10⁻⁴ equivalence at a molar ratio with respect to alkenyl groups contained in the polymer [1]. The reaction mixture was heated at 100°C for 30 minutes. Volatile substances were distilled away from the mixture under a reduced pressure, so as to obtain a polymer [2], poly(n-butyl acrylate/methyl acrylate) having silyl groups at the terminus. The number average molecular weight of the polymer [2] was found to be 20,000, and the molecular weight distribution thereof was found to be 1.2. The average number of silyl groups per molecule that had been introduced into the polymer was obtained by ¹H-NMR analysis. As a result, it was found to be 2.0.

### (Example 2) BA/MA/SA copolymer [Synthesis Example]

3.40 g (23.7 mmol) of copper (I) bromide and 47 ml of acetonitrile were added to a 1-liter flask, and the mixture was stirred under heating in a nitrogen current at 70°C for 20 minutes. Thereafter, 7.80 g (21.7 mmol) of diethyl 2,5-dibromoadipate, 336 ml (2.34 mol) of butyl arylate, 59 ml (0.63mol) of methyl acrylate, and77ml (0.19mol) of stearyl acrylate were added to the reaction product, and the obtained mixture was further stirred under heating at 80°C for 20 minutes. Thereafter, 0.495 ml (2.37 mmol) of triamine was added to the reaction product, so as to initiate the reaction. Then, 0. 165 ml (0.79 mmol) of triamine was further added thereto. The mixture was continuously stirred under heating at 80°C, and during the reaction, 0.165ml (0.79mmol) of triamine was added. 180 minutes after initiation of the reaction, the pressure in the reactor was reduced, so as to eliminate volatile substances. 240 minutes after initiation of the reaction, 141 ml of acetonitrile, 58 ml (0.40 mol) of 1,7-octadiene, and 1. 65 ml (7. 91 mmol) of triamine were added to the reaction product, and the thus obtained mixture was continuously stirred under heating at 80°C. 620 minutes after initiation of the reaction, the heating operation was terminated. The reaction solution was heated under a reduced pressure, so as to eliminate volatile substances, thereby obtaining a polymer. The obtained polymer, Kyoward 500 SH (Kyowa Chemical Co., Ltd. ; 2 parts by weight with respect to 100 parts by weight of the polymer) , and Kyoward 700 SL (Kyowa Chemical Co. , Ltd. ; 2 parts by weight with respect to 100 parts by weight of the polymer) were mixed with xylene (100 parts by weight with respect to 100 parts by weight of the polymer). The obtained mixture was stirred at 130°C. Three hours later, aluminum silicate was filtrated, and volatile substances were distilled away from the filtrate by heating under a reduced pressure. The polymer was heated under a reduced pressure at 180°C for 12 hours, so as to distill away volatile substances. The obtained polymer, Kyoward 500 SH (Kyowa Chemical Co., Ltd.; 3 parts by weight with respect to 100 parts by weight of the polymer) , and Kyoward 700 SL (Kyowa Chemical Co., Ltd.; 3 parts by weight with respect to 100 parts by weight of the polymer) were mixed with xylene (100 parts by weight with respect to 100 parts by weight of the polymer). The obtained mixture was stirred at 130°C. Five hours later, aluminum silicate was filtrated. Volatile substances were then removed from the filtrate by heating under a reduced pressure, so as to obtain a polymer

### [3] having an alkenyl group at the terminus.

The number average molecular weight of the polymer [3] was found to be 22, 000, and the molecular weight distribution thereof was found to be 1.2. The average number of alkenyl groups per molecule that had been introduced into the polymer was obtained by ¹H-NMR analysis. As a result, it was found to be 2.1.

Subsequently, the above described polymer [3] (260.0g), dimethoxymethylhydrosilane (8.46 ml, 68.6 mmol), dimethyl orthoformate (2.50 ml, 22.9 mmol), and a platinum catalyst were added to a 500-ml pressure-resistant glass reactor. The amount of the platinum catalyst used was set to 2 x 10⁻⁴ equivalence at a molar ratio with respect to alkenyl groups contained in the polymer [3]. The reaction mixture was heated at 100°C for 30 minutes. Volatile substances were distilled away from the mixture under a reduced pressure, so as to obtain a polymer [4], poly(n-butyl acrylate/methyl acrylate/stearyl acrylate) having a silyl group at the terminus. The number average molecular weight of the polymer [4] was found to be 23, 000, and the molecular weight distribution thereof was found to be 1.3, according to GPC measurement (calculation relative to polystyrene). The average number of silyl groups per molecule that had been introduced into the polymer was obtained by ¹H-NMR analysis. As a result, it was found to be 1.7.

### (Comparative example 1) Butyl acrylate homopolymer

### [Comparative Synthesis Example]

1.09 kg (7.61 mol) of copper (I) bromide and 11.4 kg of acetonitrile were added to a 250-liter pressure-resistant reactor, and the mixture was stirred under heating in a nitrogen current at 65°C for 15 minutes. Thereafter, 2.28 kg (6.34 mol) of diethyl 2,5-dibromoadipate and 26.0 kg (203 mol) of butyl arylate were added to the reaction product, and the obtained mixture was further stirred under heating at 65°C for 26 minutes. Thereafter, 22.0 g (0.127 mol) of triamine was added to the reaction product, so as to initiate the reaction. The mixture was continuously stirred under heating at 80°C. During the reaction, 109.8 g (0.634 mol) of triamine was further added, dividing into 3 times. From 30 minutes after initiation of the reaction, 104.0 kg (811 mol) of butyl acrylate was intermittently added dropwise thereto over 120 minutes. Moreover, during the reaction, 87.8 g (0.507 mol) of triamine was also added thereto. 314 minutes after initiation of the reaction, the pressure in the reactor was reduced, so as to eliminate volatile substances. 150 minutes after initiation of the pressure reduction, 34.3 kg of acetonitrile, 14.0 kg (187 mol) of 1,7-octadiene, and 439 g (2. 53 mol) of triamine were added to the reaction product, and the thus obtained mixture was continuously stirred under heating at 80°C. Eight hours after addition of the octadiene, the pressure in the reactor was reduced, so as to eliminate volatile substances, thereby obtaining a polymer [5] having an alkenyl group at the terminus. The number average molecular weight of the polymer [5] was found to be 26,000, and the molecular weight distribution thereof was found to be 1.3. The average number of alkenyl groups per molecule that had been introduced into the polymer was obtained by ¹H-NMR analysis. As a result, it was found to be 2.1.

100 parts of methylcyclohexane was added to 100 parts of the polymer [5], and the mixture was heated at 100°C for 3 hours. Insoluble portions were removed by filtration, and the remaining product was heated at 180°C for 8 hours. Volatile substances were eliminated from the reaction product at 100°C under a reduced pressure. Thereafter, 100 parts of methylcyclohexane, 2 parts of Kyoward 500 SH (manufactured by Kyowa Chemical Co., Ltd.), and 2 parts of Kyoward 700 SL (manufactured by Kyowa Chemical Co., Ltd.) were added thereto, and the obtained mixture was stirred at 150°C for 4 hours. Solids were removed by filtration, and volatile substances were then eliminated at 130°C under a reduced pressure.

Subsequently, aplatinumcatalyst, dimethoxymethylsilane, methyl orthoformate were added to the above described polymer. The amount of the platinum catalyst used was set at 10 ppm, and the amounts of the dimethoxymethylsilane and methyl orthoformate used were 2 moles equivalence and 1 mole equivalence, respectively, with respect to alkenyl groups contained in the polymer. The reaction mixture was heated at 100°C for 30 minutes. Volatile substances were distilled from the mixture under a reduced pressure, so as to obtain a polymer [6] , poly (n-butyl acrylate) having a silyl group at the terminus. The number average molecular weight of the polymer [6] was found to be 27,000, and the molecular weight distribution thereof was found to be 1.4. The average number of silyl groups per molecule that had been introduced into the polymer was obtained by ¹H-NMR analysis. As a result, it was found to be 1.7.

### (Comparative example 2) Butyl acrylate homopolymer

### [Comparative Synthesis Example]

Butyl acrylate was allowed to react with diethyl 2, 5-dibromoadipate at a molar ratio of 128 : 1 in the same manner as described in Comparative example 1, so as to obtain a polymer [7], poly(n-butyl acrylate) having an alkenyl group at the terminus. Subsequently, a polymer [8], poly(n-butylacrylate) having silyl groups at the terminus, was obtained in the same manner as in Comparative example 1. The number average molecular weight of the polymer [8] was found to be 21,000, and the molecular weight distribution thereof was found to be 1.3. The average number of silyl groups per molecule that had been introduced into the polymer was obtained by ¹H-NMR analysis. As a result, it was found to be 2.0.

### (Example 3) [According to the invention]

50 parts of DIDP (diisodecyl phthalate; manufactured by Kyowa Hakko Co., Ltd.), 1.5 parts of vinyltrimethoxysilane, and 2 parts of N- (β-aminoethyl)-γ-aminopropyltrimethoxysilane were sufficiently mixed into 100 parts of the polymer [2] obtained in Example 1, using hands in a nitrogen atmosphere. Thereafter, 1 part of tetravalent Sn catalyst (dibutyltin diacetyl acetonate) was added thereto, so as to prepare a one-component composition.

### (Example 4) [According to the invention]

Aone-component composition was prepared in the same manner as described in Example 3 with the exception that the polymer [4] obtained in Example 2 was used instead of the polymer [2] obtained in Example 1.

### (Comparative example 3)

A one-component composition was prepared in the same manner as described in Example 3 with the exception that the polymer [6] obtained in Comparative example 1 was used instead of the polymer [2] obtained in Example 1.

### (Evaluation 1)

The one-component composition produced in each of Examples 3 and 4 and Comparative example 3 was stored at 50°C for 4 weeks. Both the thus obtained composition and the composition obtained before the storage were cured at a room temperature. The skinning time was evaluated by comparison of the two compositions. It is to be noted that the skinning time in the present invention was evaluated as a period of time in which the composition mixed with a curing catalyst exhibited rubber elasticity and it was then detached from metal spatula.

The results are shown in Table 1.

**Table 1**

| | Polymer | Skinning time (minute) | |
|---|---|---|---|
| | | Initial stage (before storage) | After storage at 50°C for 4 weeks |
| Example 3 | [2] | 40 | 50 |
| Example 4 | [4] | 60 | 110 |
| Comparative example 3 | [6] | 40 | 230 |

In Comparative example 3, the curing time considerably delayed after the storage. In contrast, in Examples 3 and 4, such delay was suppressed.

### (Example 5) [Not according to the invention]

1 part of tetravalent Sn catalyst (#918 dibutyltin diacetyl acetonate) was added to 100 parts of the polymer [2] obtained in Example 1. Both substances were sufficiently mixed, using hands, so as to prepare a sheet-like cured product with a thickness of approximately 2 mm. This cured product was left at rest at a room temperature for 2 days. Thereafter, it was left at 50°C for 3 days for curing.

### (Comparative example 4)

A sheet-like cured product was prepared in the same manner as described in Example 3 with the exception that the polymer [8] obtained in Comparative example 2 was used instead of the polymer [2] used in Example 3.

### (Evaluation 2)

A 2(1/3) dumbbell specimen was stamped out of the cured product after curing. The tensile properties thereof were evaluated (using Autograph, manufactured by Shimazu Corp.; measurement temperature: 23°C; and drawing rate: 200 mm/sec).

The results are shown in Table 2.

**Table 2**

| | Polymer | Tensile physical properties | |
|---|---|---|---|
| | | Breaking strength (MPa) | Breaking elongation (%) |
| Example 5* | [2] | 0.46 | 150 |
| Comparative example 4 | [8] | 0.33 | 150 |

| | | | |
|---|---|---|---|
| *Not according to the invention | | | |

When compared with the cured product obtained in Comparative example 4, the cured product obtained in Example 5 had the same degree of elongation and higher strength.

### (Example 6) [Not according to the invention]

A polyvalent hydrogen silicon compound and a 1,1,3,3-tetramethyl-1,3-divinyldisiloxane complex of zero-valent platinum (8.3 x 10⁻⁸ mol/L xylene solution) were fully mixed into the polymer [1] obtained in Example 1. As a polyvalent hydrogen silicon compound, methyl hydrogen siloxane (S-3; SiH value: 7.69 mmol/g) , a portion of which had been modified by α-methylstyrene, was used. The amount of such a polyvalent hydrogen silicon compound used was set, such that the molar ratio of alkenyl groups in the polymer to SiH groups in the hydrogen silicon compound could be between 1 : 1.2 and 1 : 1.5. Moreover, the above platinum catalyst was added at a predetermined amount to alkenyl groups contained in the polymer used.

The thus obtained composition was deaeratedunder a reduced pressure, and it was then poured into a formwork, followed by heat curing. It was then heated to 180°C, so as to obtain a rubber-like cured product.

### (Comparative example 5)

A sheet-like cured product was prepared in the same manner as described in Example 6 with the exception that the polymer [7] obtained in Comparative example 2 was used instead of the polymer [1] used in Example 6.

### (Evaluation 3)

The mechanical properties of the cured products obtained in Example 6 and Comparative example 5 were measured in the same manner as described in Evaluation 2. The cured product in Example 6 had higher strength than that in Comparative example 5.

### (Comparative example 6) Synthesis of vinyl polymer having at least one crosslinkable silylgroupat the terminus [Comparative Synthesis Example]

1.09 kg (7.61 mol) of copper (I) bromide and 11.4 kg of acetonitrile were added to a 250-liter pressure-resistance reactor, and the mixture was stirred under heating in a nitrogen current at 65°C for 15 minutes. Thereafter, 2.28 kg (6.34 mol) of diethyl 2,5-dibromoadipate and 26.0 kg (203 mol) of butyl arylate were added to the reaction product, and the obtained mixture was further stirred under heating at 65°C for 26 minutes. Thereafter, 22.0 g (0.127 mol) of pentamethyldiethylenetriamine (hereinafter referred to as triamine) was added to the reaction product, so as to initiate the reaction. Then, the mixture was continuously stirred under heating at 80°C. During the reaction, 109.8 g (0.634 mol) of triamine was added thereto, dividing into 3 times. From 30 minutes after initiation of the reaction, 104.0 kg (811 mol) of butyl acrylate was intermittently added dropwise thereto over 120 minutes. At the same period, 87.8 g (0.507 mol) of triamine was added thereto. 314 minutes after initiation of the reaction, the pressure in the reactor was reduced, so as to eliminate volatile substances. 150 minutes after initiation of the pressure reduction, 34.3 kg of acetonitrile, 14.0 kg (187 mol) of 1,7-octadiene, and 439 g (2.53 mol) of triamine were added to the reaction product, and the thus obtained mixture was continuously stirred under heating at 80°C. Eight hours after addition of the octadiene, the pressure in the reactor was reduced, so as to eliminate volatile substances, thereby obtaining a polymer [9] having an alkenyl group at the terminus. The number average molecular weight of the polymer [9] was found to be 26,000, and the molecular weight distribution thereof was found to be 1.3. The average number of alkenyl groups per molecule that had been introduced into the polymer was obtained by ¹H-NMR analysis. As a result, it was found to be 2.1.

100 parts of methylcyclohexane was added to 100 parts of the polymer [9], and the mixture was heated at 100°C for 3 hours. Insoluble portions were removed by filtration, and the remaining product was heated at 180°C for 8 hours. Volatile substances were eliminated from the reaction product at 100°C under a reduced pressure. Thereafter, 100 parts of methylcyclohexane, 2 parts of Kyoward 500 SH (manufactured by Kyowa Chemical Co., Ltd.), and 2 parts of Kyoward 700 SL (manufactured by Kyowa Chemical Co., Ltd.) were added thereto, and the obtained mixture was stirred at 150°C for 4 hours. Solids were removed by filtration, and volatile substances were then eliminated at 130°C under a reduced pressure.

Subsequently, a platinum catalyst, dimethoxymethylsilane, methyl orthoformate were added to the above described polymer. The amount of the catalyst used was set at 10 ppm, and the amounts of the dimethoxymethylsilane and methyl orthoformate used were 2 moles equivalence and 1 mole equivalence, respectively, with respect to alkenyl groups contained in the polymer. The reaction mixture was stirred at 100°C for 30 minutes. Volatile substances were distilled away from the mixture under a reduced pressure, so as to obtain a polymer [10], poly(n-butyl acrylate) having silyl groups at the terminus. The number average molecular weight of the polymer [10] was found to be 27, 000, and the molecular weight distribution thereof was found to be 1.4. The average number of silyl groups per molecule that had been introduced into the polymer was obtained by ¹H-NMR analysis. As a result, it was found to be 1.7.

### (Examples 7 to 12) [According to the invention]

The predetermined parts of various types of methyl ester compounds (refer to Table 3), 1 . 5 parts of vinyltrimethoxysilane, and 2 parts of N- (β-aminoethyl) -γ-aminopropyltrimethoxysilane were sufficiently mixed into 100 parts of the polymer [10] obtained in Comparative example 6, using hands in a nitrogen atmosphere. Thereafter, 1 part of tetravalent Sn catalyst (dibutyltin diacetyl acetonate) was added thereto, so as to prepare a one-component composition.

### (Comparative example 7)

Aone-component composition was prepared in the same manner as described in Example 7 with the exception that 50 parts of DIDP (diisodecyl phthalate; manufactured by Kyowa Hakko Co., Ltd.) was used instead of the methyl ester compound used in Example 7.

### (Evaluation 4)

The one-component composition produced in each of Examples 7 to 12 and Comparative example 7 was stored at 50°C for 2 weeks or 4 weeks. The compositions obtained after the storage for 2 weeks or 4 weeks, and the composition obtained before the storage, were cured at a room temperature. The skinning time was evaluated by comparison of these compositions. It is to be noted that the skinning time in the present invention was evaluated as a period of time in which the composition mixed with a curing catalyst exhibited rubber elasticity and it was then detached from metal spatula.

The results are shown in Table 3.

**Table 3**

| | Methyl ester compound | Number of parts added (part) | Skinning time (minute) | | |
|---|---|---|---|---|---|
| | | | Before storage | After storage (50°C) | |
| | | | Initial stage | 2 weeks | 4 weeks |
| Example 7 | Methyl adipate | 50 | 40 | 40 | 40 |
| Example 8 | Methyl adipate | 10 | 30 | 30 | |
| Example 9 | Methyl adipate | 5 | 30 | 40 | |
| Example 10 | Methyl oleate | 10 | 30 | 60 | |
| Example 11 | Methyl stearate | 10 | 30 | 60 | |
| Example 12 | Methyl sebacate | 10 | 30 | 40 | |
| Comparative example 7 | DIDP | 50 | 40 | 100 | 230 |

In the case of Comparative example 7, as the storage period lengthened, the curing time (skinning time) also lengthened. In contrast, in Examples 7 to 12, delay in curing was suppressed. In addition, it is likely that the greater the number of moles of the methyl ester group added, the larger the effect of suppressing delay in curing that can be obtained.

### (Comparative example 8) [Comparative Synthesis Example]

### Synthesis of poly(n-butyl acrylate) having crosslinkable silyl group at the terminus

8.39 g (58.5 mmol) of copper (I) bromide and 112 ml of acetonitrile were added to a 2-liter flask, and the mixture was stirred under heating in a nitrogen current at 70°C for 30 minutes. Thereafter, 17.6 g (48..8 mmol) of diethyl 2, 5-dibromoadipate and 224 ml (1. 56 mol) of butyl arylate were added to the reaction product, and the obtained mixture was further stirred under heating at 70°C for 45 minutes. Thereafter, 0.41 ml (1.95 mmol) of pentamethyldiethylenetriamine (hereinafter referred to as triamine) was added to the reaction product, so as to initiate the reaction. The mixture was continuously stirred under heating at 70°C. From 80 minutes after initiation of the reaction, 895 ml (6.24 mol) of butyl acrylate was intermittently added dropwise thereto over 160 minutes. At the same period, 1.84 ml (8.81 mmol) of triamine was added thereto. 375 minutes after initiation of the reaction, 288 ml (1.95mol) of 1,7-octadiene and 4.1 ml (19.5mmol) of triamine were added thereto, and the mixture was continuously stirred under heating at 70°C. Thereafter, 615 minutes after initiation of the reaction, the heating operation was terminated. The reaction solution was diluted with toluene, and the dilute was then filtrated. The filtrate was heated under a reduced pressure, so as to obtain a polymer [11]. The number average molecular weight of the obtained polymer [11] was found to be 24,100, and the molecular weight distribution thereof was found to be 1.27, according to GPC measurement (mobile phase: chloroform; calculation relative to polystyrene). The average number of alkenyl groups per molecule that had been introduced into the polymer was obtained by ¹H-NMR analysis. As a result, it was found to be 2.6.

The obtained polymer, 11.9 g (0.121 mol) of potassium acetate, and 900 ml of DMAc were added to a 2-liter flask in a nitrogen atmosphere, and the obtained mixture was stirred under heating at 100°C for 11 hours. Thereafter, the reaction solution was heated under a reduced pressure, so as to eliminate DMAc. Thereafter, toluene was added thereto, and the mixture was filtrated. An adsorbent (200 g; manufactured by Kyowa Chemical Co., Ltd. ; Kyoward 700 PEL) was added to the filtrate, and the obtained mixture was then stirred under heating at 100°C for 3 hours in a nitrogen current. Thereafter, the adsorbent was eliminated by filtration, and toluene was then distilled away from the filtrate under a reduced pressure, so as to obtain a polymer [12].

The polymer [12] (648 g), dimethoxymethylhydrosilane (25.5 ml, 0.207 mol), methyl orthoformate (7.54 ml, 0.0689 mol), and 1,1,3,3-tetramethyl-1,3-divinyldisiloxane complex of zero-valent platinum, were added to a 1-liter pressure-resistant reactor. The amount of the platinum catalyst used was set to 3 x 10⁻³ equivalence at a molar ratio with respect to alkenyl groups contained in the polymer. The reactionmixture was stirred under heating at 100°C for 2 hours. Volatile substances were distilled away from the mixture under a reduced pressure, so as to obtain a polymer having silyl groups at the terminus (polymer [13]). The number average molecular weight of the obtained polymer was found to be 29, 600, and the molecular weight distribution thereof was found to be 1.9, according to GPC measurement (calculation relative to polystyrene). The average number of silyl groups per molecule that had been introduced into the polymer was obtained by ¹H-NMR analysis. As a result, it was found to be 1.9.

### (Example 13) [Synthesis Example]

### Synthesis of poly(n-butyl acrylate/methyl acrylate) copolymer having crosslinkable silyl group

A vinyl copolymer [14] having an alkenyl group at the terminus was obtained in the same manner as described in Comparative example 8 with the exception of the use of 3.67 g (25.6 mmol) of CuBr, 46 ml of acetonitrile, 9.59 g (26.6 mmol) of diethyl 2,5-dibromoadipate, 425 ml (2.96 mol) of butyl acrylate, 41 ml (0.44 mol) of methyl acrylate, 2.58 ml (12.78 mmol) of triamine, 140 ml of acetonitrile, and 53 ml (0.43 mol) of 1,7-octadiene.

This copolymer [14] (350 g) was used with dimethoxymethylhydrosilane (13.25 ml, 107.4 mmol), dimethyl orthoformate (3.92.ml, 35.8 mmol), and a platinum catalyst, so as to obtain a poly(n-butyl acrylate/methyl acrylate) copolymer [15] having silyl groups at the terminus. The number average molecular weight of the obtained copolymer was found to be approximately 20,000, and the molecular weight distribution thereof was found to be 1.2. The average number of silyl groups per molecule that had been introduced into the copolymer was obtained by ¹H-NMR analysis. As a result, it was found to be approximately 2.0.

### (Example 14) [Synthesis Example]

### Synthesis of poly(n-butyl acrylate/methyl acrylate/stearyl acrylate) copolymer having crosslinkable silyl group

A vinyl copolymer [16] having an alkenyl group at the terminus was obtained in the same manner as described in Comparative example 8 with the exception of the use of 3.40 g (23.7 mmol) of CuBr, 47 ml of acetonitrile, 7.80 g (21.7 mmol) of diethyl 2,5-dibromoadipate, 336 ml (2.34 mol) of butyl acrylate, 59 ml (0.63 mol) of methyl acrylate, 77 ml (0.19 mol) of stearyl acrylate, 2.475 ml (11.86 mmol) of triamine, 141 ml of acetonitrile, and 58 ml (0.40 mol) of 1,7-octadiene.

This copolymer [16] (260 g) was used with dimethoxymethylhydrosilane (8.46 ml, 68.6 mmol), dimethyl orthoformate (2.50 ml, 22.9 mmol), and a platinum catalyst, so as to obtain a poly(n-butyl acrylate/methyl acrylate) copolymer [17] having silyl groups at the terminus. The number average molecular weight of the obtained copolymer was found to be approximately 23,000, and the molecular weight distribution thereof was found to be 1.3. The average number of silyl groups per molecule that had been introduced into the copolymer was obtained by ¹H-NMR analysis. As a result, it was found to be approximately 1.7.

### (Synthetic example 1)

### Synthesis of acrylic plasticizer (n-butyl acrylate/methyl acrylate copolymer)

A solution, in which 22.4 g (0.26 mol) of methyl acrylate, 77.6 g (0.61 mol) of butyl acrylate, 10 g (0.05 mol) of n-dodecyl mercaptan, 2.7 g of 2,2'-azobis(2-methylbutyronitrile), and 20 g of toluene had been dissolved, was added dropwise to 50 g of toluene that had been heated to 105°C, over 5 hours. Thereafter, a solution obtained by dissolving 0.3 g of 2,2'-azobis(2-methylbutyronitrile) in 10 g of toluene was added dropwise to the reaction solution over 1 hour. Thereafter, the "post polymerization" was carried out for 2 hours, so as to obtain a vinyl copolymer [18].

Toluene was removed from the obtained solution by reduced-pressure distillation using an evaporator, so as to obtain an acrylic copolymer. The number average molecular weight of the obtained copolymer was found to be 2,174, the molecular weight distribution thereof was found to be 2.7, and the viscosity thereof was found to be

### (Example 15) [According to the invention]

With respect to 100 parts by weight of the polymer [13] obtained in Comparative example 8, 60 parts by weight of DIDP (diisodecyl phthalate) acting as a plasticizer, 150 parts by weight of colloidal calcium carbonate (manufactured by Shiraishi Kogyo Kaisha, Ltd.; product name: CCR) , 20 parts by weight of heavy calcium carbonate (manufacturedbyMaruo Calcium Co., Ltd.; product name: Nanox 25A), 10 parts by weight of titanium oxide (manufactured by Ishihara Sangyo Kaisha, Ltd. ; product name: R-820), 2 parts by weight of thixotropic agent (manufactured by Kusumoto Chemicals, Ltd.; product name: D-6500) , 1 part by weight of benzotriazole ultraviolet absorber (manufactured by Ciba Special Chemicals, product name: Tinuvin 213), and 1 part by weight of hinderd amine light stabilizer (manufactured by Sankyo Co., Ltd.; product name: Sanol LS765) were measured. These substances were blended and fully mixed, and the obtained mixture was then passed through a small triple paint roll 3 times. Thereafter, reduced-pressure dehydration was carried out at 120°C for 2 hours, and the resultant product was cooled to 50°C or lower. Thereafter, 5 parts by weight of carbon dimethyl ester (manufactured by Daihachi Chemical Industry, Co., Ltd.; product name: DMA (dimethyl adipate)), 2 parts by weight of vinyltrimethoxysilane, 2 parts by weight of aminosilane compound (manufactured by Nippon Unicar Co., Ltd.; product name: A-1120), and 2 parts by weight of curing promoter (Nitto Kasei Co. , Ltd.; product name: U-220) were added thereto and mixed, so as to obtain a curable composition. The surface curing time of the above curable composition was measured under conditions of 23°C x 55% R.H. In addition, a sheet-like curable sample with a thickness of 3 mm was produced from the above curable composition in accordance with JIS A5758. Thus, dumbbell (JIS A) used for a tensile test was produced.

### (Example 16) [According to the invention]

A test was carried out by the same method as applied in Example 15 with the exception that 10 parts by weight of DMA (dimethyl adipate) was added.

### (Example 17) [According to the invention]

A test was carried out by the same method as applied in Example 15 with the exception that 10 parts by weight of DMSe (dimethyl sebacate) was added insteadof DMA (dimethyl adipate).

### (Example 18) [According to the invention]

A test was carried out by the same method as applied in Example 15 with the exceptions that 80 parts by weight of Arufon UP 1020 (manufactured by Toagosei, Co., Ltd.) was used as a plasticizer instead of DIDP, and that 20 parts by weight of DMA was added.

### (Example 19) [According to the invention]

With respect to 100 parts by weight of the copolymer [15] obtained in Example 13, 80 parts by weight of DIDP (diisodecyl phthalate) acting as a plasticizer, 150 parts by weight of colloidal calcium carbonate (manufactured by Shiraishi Kogyo Kaisha, Ltd.; product name: CCR) , 20 parts by weight of heavy calcium carbonate (manufactured by Maruo Calcium Co., Ltd.; product name: Nanox 25A) , 10 parts by weight of titanium oxide (manufactured by Ishihara Sangyo Kaisha, Ltd.; product name: R-820), 2 parts by weight of thixotropic agent (manufactured by Kusumoto Chemicals, Ltd.; product name: D-6500), 1 part by weight of benzotriazole ultraviolet absorber (manufactured by Ciba Special Chemicals, product name: Tinuvin 213), and 1 part by weight of hinderd amine light stabilizer (manufactured by Sankyo Co., Ltd.; product name: Sanol LS765) were measured. These substances were blended and fully mixed, and the obtained mixture was then passed through a small triple paint roll 3 times. Thereafter, reduced-pressure dehydration was carried out at 120°C for 2 hours, and the resultant product was cooled to 50°C or lower. Thereafter, 2 parts by weight of vinyltrimethoxysilane, 2 parts by weight of aminosilane compound (manufacturedbyNipponUnicarCo., Ltd.; product name: A-1120) , and 2 parts by weight of curing promoter (Nitto Kasei Co. , Ltd.; product name: U-220) were added thereto and mixed, so as to obtain a curable composition. The surface curing time of the above curable composition was measured under conditions of 23°C x 55% R.H. In addition, a sheet-like curable sample with a thickness of 3 mm was produced from the above curable composition in accordance with JIS A5758. Thus, dumbbell (JIS A) used for a tensile test was produced.

### (Example 20) [According to the invention]

With respect to 100 parts by weight of the copolymer [17] obtained in Example 14, 80 parts by weight of PPG (manufactured by Bayer; ACCLAIM12200) having a number average molecular weight of 12,000 that acts as a plasticizer, 150 parts by weight of colloidal calcium carbonate (manufactured by Shiraishi Kogyo Kaisha, Ltd. ; product name: CCR) , 20 parts by weight of heavy calcium carbonate (manufactured by Maruo Calcium Co., Ltd.; product name: Nanox 25A), 10 parts by weight of titanium oxide (manufactured by Ishihara Sangyo Kaisha, Ltd.; product name: R-820), 2 parts by weight of thixotropic agent (manufactured by Kusumoto Chemicals, Ltd.; product name: D-6500) , 1 part by weight of benzotriazole ultraviolet absorber (manufactured by Ciba Special Chemicals, product name: Tinuvin 213), and 1 part by weight of hinderd amine light stabilizer (manufactured by Sankyo Co., Ltd.; product name: Sanol LS765) were measured. These substances were blended and fully mixed, and the obtained mixture was then passed through a small triple paint roll 3 times. Thereafter, reduced-pressure dehydration was carried out at 120°C for 2 hours, and the resultant product was cooled to 50°C or lower. Thereafter, 2 parts by weight of vinyltrimethoxysilane, 2 parts by weight of aminosilane compound (manufactured by Nippon Unicar Co., Ltd. ; productname: A-1120), and 2 parts by weight of curing promoter (Nitto Kasei Co. , Ltd.; product name: U-220) were added thereto and mixed, so as to obtain a curable composition. The surface curing time of the above curable composition was measured under conditions of 23°C x 55% R.H. In addition, a sheet-like curable sample with a thickness of 3 mm was produced from the above curable composition in accordance with JIS A5758. Thus, dumbbell (JIS A) used for a tensile test was produced.

### (Example 21) [According to the invention]

With respect to 100 parts by weight of the polymer [13] obtained in Comparative example 8, 80 parts by weight of the polymer obtained in Synthetic example 1 acting as a plasticizer, 150 parts by weight of colloidal calcium carbonate (manufactured by Shiraishi Kogyo Kaisha, Ltd.; product name: CCR) , 20 parts by weight of heavy calcium carbonate (manufactured by Maruo Calcium Co., Ltd. ; product name: Nanox 25A), 10 parts by weight of titanium oxide (manufactured by Ishihara Sangyo Kaisha, Ltd.; product name: R-820), 2 parts by weight of thixotropic agent (manufactured by Kusumoto Chemicals, Ltd.; product name: D-6500), 1 part by weight of benzotriazole ultraviolet absorber (manufactured by Ciba Special Chemicals, product name: Tinuvin 213), and 1 part by weight of hinderd amine light stabilizer (manufactured by Sankyo Co., Ltd.; product name: Sanol LS765) were measured. These substances were blended and fully mixed, and the obtained mixture was then passed through a small triple paint roll 3 times. Thereafter, reduced-pressure dehydration was carried out at 120°C for 2 hours, and the resultant product was cooled to 50°C or lower. Thereafter, 2 parts by weight of vinyltrimethoxysilane, 2 parts by weight of aminosilane compound (manufactured by Nippon Unicar Co., Ltd.; product name: A-1120), and 2 parts by weight of curing promoter (Nitto Kasei Co., Ltd.; product name: U-220) were added thereto and mixed, so as to obtain a curable composition. The surface curing time of the above curable composition was measured under conditions of 23°C x 55% R. H. In addition, a sheet-like curable sample with a thickness of 3 mm was produced from the above curable composition in accordance with JIS A5758. Thus, dumbbell (JIS A) used for a tensile test was produced.

### (Synthetic example 2)

A solution, in which 14.5 g (0.14 mol) of methyl methacrylate, 68. 5 g (0.53 mol) of butyl acrylate, 15 g (0.08 mol) of stearyl methacrylate, 2 g (8.6 mmol) of γ-methacryloxypropylmethyldimethoxysilane, 0.5 g of 2,2'-azobis(2-methylbutyronitrile), and 20 g of toluene had been dissolved, was added dropwise to 50 g of toluene that had been heated to 105°C, over 5 hours. Thereafter, the "post polymerization" was carried out for 1 hour, so as to obtain a vinyl copolymer [19].

### (Comparative example 9) [Comparative Synthesis Example]

500 g of linear polypropylene oxide with a number average molecular weight of 20,000, the main chain skeleton of which was obtained using a composite metal cyanide complex catalyst and the terminus of which was an allyl group, and 10 g of hexane, were added to a pressure-resistant glass reactor equipped with a stirrer, followed by azeotropic dehydration at 90°C. Hexane was removed by reduced-pressure distillation, and then nitrogen substitution was carried out. Thereafter, 20 µl of chloroplatinic acid catalyst (5% by weight of isopropanol solution calculated relative to platinum) was added to the resultant product, and 4.6 g of DMS (dimethoxymethylsilane) was slowly added dropwise thereto, while stirring. The mixed solution was reacted at 90°C for 2 hours, and unreacted DMS was then removed by reduced-pressure distillation, so as to obtain a silylated polymer. This polymer was blended with the copolymer [13] obtained in Comparative example 8 at a weight ratio of solids of 70 : 30. Thereafter, the solvent was removed by distillation, so as to obtain a non-solvent polymer [20]. When the blended ratio was set at 75 : 25, the viscosity of the polymer was 49.8 Pa/s. When the blended ratio was set at 70 : 30, it was 60.7 Pa/s, and when the blended ratio was set at 65 : 35, it was 86.2 Pa/s, wherein a BM type viscometer, rotor No. 4 was used at 23°C.

### (Comparative example 10) [Comparative Synthesis Example]

Propylene oxide was polymerized using a composite metal cyanide complex catalyst (zinc hexacyanocobaltate), so as to obtain an oxypropylene polymer. The obtained oxypropylene polymer was treated by the method described in Synthetic example 1 of Japanese Patent Laid-OpenNo. 5-117521, so as to synthesize an oxypropylene polymer [21] having a reactive silicon group at the terminus, which had a number average molecular weight of 11, 000 and Mw/Mnof 1. 9. Theratioof introductionof reactive silicon groups into all the termini was 65%.

The polymer [21] was blended with the copolymer [13] obtained in Comparative example 8 at a weight ratio of solids of 70 : 30. Thereafter, the solvent was removed by distillation, so as to obtain a polymer [22].

### (Example 22) [According to the invention]

With respect to 100 parts by weight of the polymer [20] obtained in Comparative example 9, 55 parts by weight of PPG (polypropylene glycol) with a number average molecular weight of 3,000 used as a plasticizer, 120 parts by weight of calcium carbonate (manufactured by Shiraishi Kogyo Kaisha, Ltd.; product name: CCR), 20 parts by weight of titanium oxide (manufactured by Ishihara Sangyo Kaisha, Ltd. ; product name: R-820), 2 parts by weight of thixotropic agent (manufactured by Kusumoto Chemicals, Ltd. ; product name: D-6500), 1 part by weight of benzotriazole ultraviolet absorber (manufactured by Ciba Special Chemicals, product name: Tinuvin 327), and 1 part by weight of hinderd amine light stabilizer (manufactured by Sankyo Co., Ltd.; product name: Sanol LS770) were measured. These substances were blended and fully mixed, and the obtained mixture was then passed through a small triple paint roll 3 times. Thereafter, 10 parts by weight of dimethyl adipate (DMA), 2 parts by weight of vinyltrimethoxysilane, 3 parts by weight of aminosilane compound (manufactured by Nippon Unicar Co., Ltd.; product name: A-1120), and 2 parts by weight of curing promoter (Nitto Kasei Co., Ltd. ; product name: U-220) were added thereto and mixed, so as to obtain a curable composition. The surface curing time of the above curable composition was measured under conditions of 23°C x 55% R.H. In addition, a sheet-like curable sample with a thickness of 3 mm was produced from the above curable composition in accordance with JIS A5758. Thus, dumbbell (JIS A) used for a tensile test was produced.

### (Example 23) [According to the invention]

A composition was produced and evaluated by the same method as applied in Example 22 with the exceptions that the polymer in Comparative example 10 was used instead of the polymer in Comparative example 9, and that DIDP was used as a plasticizer instead of PPG with a molecular weight of 3,000.

### (Comparative example 11)

A test was carried out by the same method as applied in Example 15 with the exception that DMA was not added.

### (Comparative example 12)

A test was carried out by the same method as applied in Example 22 with the exception that DMA was not added.

### (Comparative example 13)

A test was carried out by the same method as applied in Example 23 with the exception that DMA was not added.

The results of Examples 15 to 23 and Comparative examples 11 to 13 are shown in Tables 4, 5, and 6.

In the tables, items to be measured indicate the following meanings.

### Surface curing time

Initial stage: measured 7 days after production of one-component

After storage: measured after the storage under conditions of 50°C x 4 weeks

### Curing delay magnification

Surface curing time after the storage/surface curing time at the initial stage

### Residual tackiness

M: tackiness is felt when touched with fingers
G: almost no tackiness is felt
E: no tackiness is felt

**Table 4**

| Items to be tested | | Example 15 | Example 16 | Example 17 | Example 18 | Example 19 |
|---|---|---|---|---|---|---|
| Surface curing time (minute) | Initial stage | 55 | 55 | 50 | 120 | 55 |
| | After storage | 105 | 50 | 110 | 120 | 105 |
| Curing delay magnification | | 1.91 | 0.91 | 2.20 | 1.00 | 1.91 |
| Residual tackiness | 3^{rd} day | M to G | G | M to G | M | M |
| | 7^{th} day | G to E | E | G to E | G | G |
| M100 (MPa) | | 0.41 | 0.42 | 0.35 | 0.31 | 0.53 |
| TB (MPa) | | 0.91 | 0.95 | 0.83 | 0.74 | 1.00 |
| Eb (%) | | 383 | 359 | 378 | 390 | 304 |

**Table 5**

| Items to be tested | | Example 20 | Example 21 | Example 22 | Example 23 |
|---|---|---|---|---|---|
| Surface curing time (minute) | Initial stage | 65 | 80 | 40 | 70 |
| | After storage | 80 | 160 | 40 | 60 |
| Curing delay magnification | | 1.23 | 2.00 | 1.00 | 0.86 |
| Residual tackiness | 3^{rd} day | M | M | G to E | G to E |
| | 7^{th} day | G | G | E | E |
| M100 (MPa) | | 0.37 | 0.30 | 0.22 | 0.29 |
| TB (MPa) | | 1.05 | 0.79 | 1.21 | 1.03 |
| Eb (%) | | 380 | 370 | 786 | 700 |

**Table 6**

| Items to be tested | | Comparative example 11 | Comparative example 12 | Comparative example 13 |
|---|---|---|---|---|
| Surface curing time (minute) | Initial stage | 60 | 45 | 70 |
| | After storage | 360 | 90 | 154 |
| Curing delay magnification | | 6.00 | 2.00 | 2.20 |
| Residual tackiness | 3^{rd} day | M | G to E | G to E |
| | 7^{th} day | G | G to E | G to E |
| M100 (MPa) | | 0.31 | 0.27 | 0.25 |
| TB (MPa) | | 0.77 | 1.20 | 1.00 |
| Eb (%) | | 410 | 748 | 710 |

### (Synthetic example 3)

A solution, in which 14. 5 g of methyl methacrylate, 68.5 g of butyl acrylate, 15 g of stearyl methacrylate, 2 g of γ-methacryloxypropylmethyldimethoxysilane, 0.5 g of 2,2'-azobis(2-methylbutyronitrile), and 20 g of toluene had been dissolved, was added dropwise to 50 g of toluene that had been heated to 105°C, over 5 hours. Thereafter, the "post polymerization" was carried out for 1 hour, so as to obtain a vinyl copolymer.

### (Synthetic example 4)

500 g of linear polypropylene oxide with a number average molecular weight of 20, 000, the main chain skeleton of which was obtained using a composite metal cyanide complex catalyst and the terminus of which was an allyl group, and 10 g of hexane, were added to a pressure-resistant glass reactor equipped with a stirrer, followed by azeotropic dehydration at 90°C. Hexane was removed by reduced-pressure distillation, and then nitrogen substitution was carried out. Thereafter, 20 µl of chloroplatinic acid catalyst (5% by weight of isopropanol solution calculated relative to platinum) was added to the resultant product, and 4.6 g of DMS (dimethoxymethylsilane) was slowly added dropwise thereto, while stirring. The mixed solution was reacted at 90°C for 2 hours, and unreacted DMS was then removed by reduced-pressure distillation, so as to obtain a silylated polymer. This polymer was blended with the copolymer obtained in Synthetic example 3 at a weight ratio of solids of 70 : 30. Thereafter, the solvent was removed by distillation, so as to obtain a non-solvent polymer (A). When the blended ratio was set at 75 : 25, the viscosity of the polymer was 49.8 Pa/s. When the blended ratio was set at 70 : 30, it was 60.7 Pa/s, and when the blended ratio was set at 65 : 35, it was 86.2 Pa/s, wherein a BM type viscometer, rotor No. 4 was used at 23°C.

### (Example 24) [Not according to the invention]

With respect to 100 parts by weight of the polymer obtained in Synthetic example 4, 55 parts by weight of PPG (polypropylene glycol) with a number average molecular weight of 3,000 used as a plasticizer, 120 parts by weight of calcium carbonate (manufactured by Shiraishi Kogyo Kaisha, Ltd.; product name: CCR), 20 parts by weight of titanium oxide (manufactured by Ishihara Sangyo Kaisha, Ltd.; product name: R-820), 2 parts by weight of thixotropic agent (manufactured by Kusumoto Chemicals, Ltd.; product name: D-6500), 1 part by weight of benzotriazole ultraviolet absorber (manufactured by Ciba Special Chemicals, product name: Tinuvin 327), and 1 part by weight of hinderdamine light stabilizer (manufactured by Sankyo Co., Ltd.; product name: Sanol LS770) were measured. These substances were blended and fully mixed, and the obtained mixture was then passed through a small triple paint roll 3 times. Thereafter, 10 parts by weight of dimethyl adipate, 2 parts by weight of vinyltrimethoxysilane, 3 parts by weight of aminosilane compound (manufactured by Nippon Unicar Co., Ltd.; product name: A-1120), and 2 parts by weight of curing promoter (Nitto Kasei Co., Ltd.; product name: U-220) were added thereto and mixed, so as to obtain a curable composition. The surface curing time of the above curable composition was measured under conditions of 23°C x 55% R.H. In addition, a sheet-like curable sample with a thickness of 3 mm was produced from the above curable composition in accordance with JIS A5758. Thus, dumbbell (JIS A) used for a tensile test was produced.

### (Example 25) [Not according to the invention]

A test was carried out by the same method as applied in Example 24 with the exception that 10 parts by weight of dimethyl sebacate was added instead of dimethyl adipate.

### (Comparative example 14)

A test was carried out by the same method as applied in Example 24 with the exception that dimethyl adipate was not added.

The tensile properties of tensile test dumbbells produced in Examples 24 and 25 and Comparative example 14 were measured using Autograph (manufactured by Shimadzu Corp.; AG500C). The results are shown in Table 7. In the table, M100 indicates the modulus obtained by 100% elongation, Tb indicates breaking strength, and Eb indicates breaking elongation.

The items to be measured other than those regarding the tensile test indicate the following meanings.

### Surface curing time

Initial stage: measured 7 days after production of one-component
After storage: measured after the storage under conditions of 50°C x 4 weeks

### Curing delay magnification

Surface curing time after the storage/surface curing time at the initial stage

### Residual tackiness

M: tackiness is felt when touched with fingers
G: almost no tackiness is felt
E: no tackiness is felt

**Table 7**

| Items to be tested | | Example 24* | Example 25* | Comparative example 14 |
|---|---|---|---|---|
| Surface curing time (minute) | Initial stage | 40 | 40 | 45 |
| | After storage | 40 | 40 | 90 |
| Curing delay magnification | | 1.00 | 1.00 | 2.00 |
| Residual tackiness | 3^{rd} day | G to E | G to E | G to E |
| | 7^{th} day | E | E | G to E |
| M100 (MPa) | | 0.23 | 0.22 | 2.7 |
| TB (MPa) | | 1.23 | 1.21 | 1.20 |
| Eb (%) | | 813 | 786 | 748 |

| | | | | |
|---|---|---|---|---|
| *Not according to the invention | | | | |

### Industrial Applicability

According to the present invention, a curable composition having improved storage stability is obtained due to methyl ester groups contained in a polymer. In addition, utilizing the improved storage stability, this curable composition can preferably be used for a sealant or the like. The use of a polymer having a methyl ester group at an appropriate composition ratio enables the improvement of the mechanical properties of a cured product obtained.

Moreover, according to the present invention, a curable composition having improved storage stability, which comprises a vinyl polymer having a crosslinkable silyl group as an essential component, is obtained by adding a compound having a methyl ester group.

## Claims

1. A curable composition which comprises the following two components as essential components:
(I) a vinyl polymer, which has at least one crosslinkable silyl group represented by general formula (1) at the terminus:
-[Si(R¹)_{2-b}(Y)_{b}O]ₘ-Si(R²)₃₋ₐ(Y)ₐ (1)
wherein each of R¹ and R² represents an alkyl group containing 1 to 20 carbon atoms, an aryl group containing 6 to 20 carbon atoms, an aralkyl group containing 7 to 20 carbon atoms, or a triorganosiloxy group represented by (R')₃SiO-, wherein R' represents a monovalent hydrocarbon group containing 1 to 20 carbon atoms, and three R's may be identical to or different from one another, and when two or more R¹s or R²s exist, these may be identical to or different from one another; Y represents a hydroxyl group or a hydrolyzable group, and when two or more Ys exist, these may be identical to or different from one another; and a represents 0, 1, 2, or 3, b represents 0, 1, or 2, and m represents an integer between 0 and 19, which satisfies a + mob ≥ 1; and
(III) an aminosilane,
wherein:
- said vinyl polymer (I) has a monomer containing a methyl ester group as an essential constituent unit; or
- said curable composition further comprises a compound (II) having a methyl ester group, wherein said compound (II) is not the same as vinyl polymer (I).

2. The curable composition according to claim 1, wherein the amino group contained in the aminosilane (III) is a primary amine.

3. The curable composition according to claim 1 or 2, which comprises the following two components as essential components:
- a vinyl polymer (I), which has at least one crosslinkable silyl group of general formula (1) as defined in claim 1 at the terminus and a monomer containing a methyl ester group as an essential constituent unit; and
- (III) an aminosilane.

4. The curable composition according to claim 3, wherein the vinyl polymer (I) is a (meth)acrylic polymer.

5. The curable composition according to claim 3 or 4, wherein the monomer containing a methyl ester group which constitutes the vinyl polymer (I) is methyl acrylate.

6. The curable composition according to claim 3 or 4, wherein the monomer containing a methyl ester group which constitutes the vinyl polymer (I) is methyl methacrylate.

7. The curable composition according to any one of claims 1 to 6, wherein the vinyl polymer (I) is in a liquid state at 23°C.

8. The curable composition according to any one of claims 1 to 7, wherein the vinyl polymer (I) is synthesized by living radical polymerization.

9. The curable composition according to any one of claims 1 to 9, wherein the vinyl polymer (I) is synthesized by atom transfer radical polymerization.

10. The curable composition according to any one of claims 1 to 9, wherein the vinyl polymer (I) has a ratio of weight average molecular weight to number average molecular weight of less than 1.8, the ratio being determined by gel permeation chromatography.

11. A curable composition according to claim 1, which comprises the following components as essential components:
- a vinyl polymer (I) having at least one crosslinkable silyl group represented by the general formula (1) as defined in claim 1 at the terminus;
- a compound (II) having a methyl ester group, where compound (II) having a methyl ester group is not the same as vinyl polymer (I); and
- an aminosilane (III).

12. The curable composition according to claim 11, wherein the vinyl polymer (I) is an acrylic polymer.

13. The curable composition according to claim 12, wherein the vinyl polymer (I) is an acrylic ester polymer.

14. The curable composition according to any one of claims 11 to 13, wherein the compound (II) having a methyl ester group is not a polymer.

15. The curable composition according to any one of claims 11 to 14, wherein the carbon atom at the α-position of the methyl ester group contained in the compound (II) having a methyl group, and which is not the same as vinyl polymer (I), is primary or secondary.

16. The curable composition according to claims 11 to 15, wherein the compound (II) having a methyl ester group, and which is not the same as vinyl polymer (I), is a dimethyl ester of a dicarboxylic acid.

17. The curable composition according to any one of claims 11 to 16, wherein the compound (II) having a methyl ester group is selected from the group consisting of:
dimethyl malonate, dimethyl succinate, dimethyl glutarate, dimethyl adipate, dimethyl sebacate, methyl acetate, methyl propionate, methyl butyrate, methyl valerate, methyl caprylate, methyl caprate, methyl laurate, methyl myristate, methyl palmitate, methyl stearate, methyl oleate, methyl ricinoleate, and coconut fatty acid methyl ester.

18. The curable composition according to any one of claims 11 to 17, wherein the compound (II) having a methyl ester group, and which is not the same as vinyl polymer (I), is a polymer containing a monomer having a methyl ester group as a constituent unit.

19. The curable composition according to claim 18, wherein the monomer having a methyl ester group is methyl acrylate.

20. The curable composition according to claim 18 or 19, wherein the compound having a methyl ester group is a copolymer containing a monomer having a methyl ester group as a constituent, and that among ester groups contained in monomers other than the monomer having a methyl ester group, those having an alkoxy group that is primary and contains 5 or more carbon atoms make up 80% or less at a molar ratio with respect to the methyl ester groups.

21. The curable composition according to claim 18 or 19, wherein the compound having a methyl ester group is a copolymer containing a monomer having a methyl ester group as a constituent, and that among ester groups contained in monomers other than the monomer having a methyl ester group, those having an alkoxy group that is primary and contains 2 to 4 carbon atoms make up 400% or less at a molar ratio with respect to the methyl ester groups.

22. The curable composition according to any one of claims 1 to 21, wherein the curable composition is a one-component curable composition.

23. The curable composition according to any one of claims 1 to 22, which comprises a condensation curing catalyst as an essential component.

24. The curable composition according to claim 23, wherein the condensation curing catalyst is a tin curing catalyst.

25. The curable composition according to any of claims 1 to 24, wherein the aminosilane (III) is a silane coupling agent.

26. The curable composition according to any one of claims 1 to 25, further comprising a polyether polymer having at least one crosslinkable silyl group, the crosslinkable silyl group being represented by the general formula (1) as defined in claim 1.

27. A sealant, wherein the curable composition according to any one of claims 1 to 26 is used.

28. A liquid gasket, wherein the curable composition according to any one of claims 1 to 26 is used.

29. An adhesive, wherein the curable composition according to any one of claims 1 to 26 is used.

## Patentansprüche

1. Härtbare Zusammensetzung, welche die folgenden beiden Bestandteile als wesentliche Bestandteile umfaßt:
(I) ein Vinylpolymer, welches wenigstens eine vernetzbare Silylgruppe am Ende hat, die dargestellt ist durch die allgemeine Formel (1):
-[Si(R¹)_{2-b}(Y)_{b}O]ₘ-Si(R²)₃₋ₐ(Y)ₐ (1)
wobei jedes R¹ und R² eine Alkylgruppe, die 1 bis 20 Kohlenstoffatome enthält, eine Arylgruppe, die 6 bis 20 Kohlenstoffatome enthält, eine Aralkylgruppe, die 7 bis 20 Kohlenstoffatome enthält, oder eine Triorganosiloxygruppe darstellt, die dargestellt ist durch (R')₃SiO-, wobei R' eine einwertige Kohlenwasserstoffgruppe, die 1 bis 20 Kohlenstoffatome enthält, und drei R' identisch oder verschieden von einander sein können, und wenn zwei oder mehr R¹ oder R² vorliegen, diese identisch oder verschieden voneinander sein können; Y eine Hydroxylgruppe oder eine hydrolysierbare Gruppe darstellt und wenn zwei oder mehr Y vorliegen, diese identisch oder verschieden voneinander sein können, und a 0, 1, 2 oder 3 darstellt, b 0, 1 oder 2 darstellt und m eine ganze Zahl zwischen 0 und 19 darstellt, welche a + mb ≥ 1 erfüllt; und
(III) ein Aminosilan,
wobei
- das Vinylpolymer (I) ein Monomer hat, das eine Methylestergruppe als wesentliche Bestandteileinheit enthält, oder
- die härtbare Zusammensetzung ferner eine Verbindung (II) mit einer Methylestergruppe umfaßt, wobei die Verbindung (II) nicht dieselbe wie Vinylpolymer (I) ist.

2. Härtbare Zusammensetzung nach Anspruch 1, wobei die Aminogruppe, die in dem Aminosilan (III) enthalten ist, ein primäres Amin ist.

3. Härtbare Zusammensetzung nach Anspruch 1 oder 2, welche die folgenden zwei Bestandteile als wesentliche Bestandteile umfaßt:
- ein Vinylpolymer (I), welches wenigstens eine vernetzbare Silylgruppe der allgemeinen Formel (1) wie in Anspruch 1 definiert am Ende hat, und ein Monomer, das eine Methylestergruppe als wesentliche Bestandteileinheit enthält, und
- (III) ein Aminosilan.

4. Härtbare Zusammensetzung nach Anspruch 3, wobei das Vinylpolymer (I) ein (Meth)acrylpolymer ist.

5. Härtbare Zusammensetzung nach Anspruch 3 oder 4, wobei das eine Methylestergruppe enthaltende Monomer, welches das Vinylpolymer (I) bildet, Methylacrylat ist.

6. Härtbare Zusammensetzung nach Anspruch 3 oder 4, wobei das eine Methylestergruppe enthaltende Monomer, welches das Vinylpolymer (I) bildet, Methylmethacrylat ist.

7. Härtbare Zusammensetzung nach einem der Ansprüche 1 bis 6, wobei das Vinylpolymer (I) bei 23°C in einem flüssigen Zustand ist.

8. Härtbare Zusammensetzung nach einem der Ansprüche 1 bis 7, wobei das Vinylpolymer (I) synthetisiert ist durch lebende Radikalpolymerisation.

9. Härtbare Zusammensetzung nach einem der Ansprüche 1 bis 8, wobei das Vinylpolymer (I) synthetisiert ist durch Atomüberführungsradikalpolymerisation.

10. Härtbare Zusammensetzung nach einem der Ansprüche 1 bis 9, wobei das Vinylpolymer (I) ein Verhältnis von durchschnittlichem Molekulargewicht zu durchschnittlicher Molekulargewichtszahl von weniger als 1,8 hat, wobei das Verhältnis durch Gelpermeationschromatographie bestimmt ist.

11. Härtbare Zusammensetzung nach Anspruch 1, welche die folgenden Bestandteile als wesentliche Bestandteile umfaßt:
- ein Vinylpolymer (I) mit wenigstens einer vernetzbaren Silylgruppe am Ende, die durch die allgemeine Formel (1) wie in Anspruch 1 dargestellt ist,
- eine Verbindung (II) mit einer Methylestergruppe, wobei Verbindung (II) mit einer Methylestergruppe nicht dieselbe wie Vinylpolymer (I) ist, und
- ein Aminosilan (III).

12. Härtbare Zusammensetzung nach Anspruch 11, wobei das Vinylpolymer (I) ein Acrylpolymer ist.

13. Härtbare Zusammensetzung nach Anspruch 12, wobei das Vinylpolymer (I) ein Acrylesterpolymer ist.

14. Härtbare Zusammensetzung nach einem der Ansprüche 11 bis 13, wobei die Verbindung (II) mit einer Methylestergruppe kein Polymer ist.

15. Härtbare Zusammensetzung nach einem der Ansprüche 11 bis 14, wobei das Kohlenstoffatom an der α-Position der Methylestergruppe, die in der Verbindung (II) mit einer Methylgruppe enthalten ist und welche nicht dieselbe wie Vinylpolymer (I) ist, primär oder sekundär ist.

16. Härtbare Zusammensetzung nach den Ansprüchen 11 bis 15, wobei die Verbindung (II) mit einer Methylestergruppe und welche nicht dieselbe wie Vinylpolymer (I) ist, ein Dimethylester von einer Dicarbonsäure ist.

17. Härtbare Zusammensetzung nach einem der Ansprüche 11 bis 16, wobei die Verbindung (II) mit einer Methylestergruppe aus der Gruppe gewählt ist, die besteht aus:
Dimethylmalonat, Dimethylsuccinat, Dimethylglutarat, Dimethyladipat, Dimethylsebacat, Methylacetat, Methylpropionat, Methylbutyrat, Methylvalerat, Methylcaprylat, Methylcaprat, Methyllaurat, Methylmyristat, Methylpalmitat, Methylstearat, Methyloleat, Methylricinoleat und Kokosfettsäuremethylester.

18. Härtbare Zusammensetzung nach einem der Ansprüche 11 bis 17, wobei die Verbindung (II), die eine Methylestergruppe besitzt und die nicht dieselbe wie Vinylpolymer (I) ist, ein Polymer ist, das ein Monomer mit einer Methylestergruppe als eine Bestandteileinheit enthält.

19. Härtbare Zusammensetzung nach Anspruch 18, wobei das Monomer mit einer Methylestergruppe Methylacrylat ist.

20. Härtbare Zusammensetzung nach Anspruch 18 oder 19, wobei die Verbindung mit einer Methylestergruppe ein Copolymer ist, das ein Monomer mit einer Methylestergruppe als Bestandteil enthält, und wobei unter Estergruppen, die in den Monomeren enthalten sind, die verschieden von dem Monomer mit einer Methylestergruppe sind, jene mit einer Alkoxygruppe, die primär ist und fünf oder mehr Kohlenstoffatome enthält, bis zu 80% oder weniger des Molverhältnisses bezüglich der Methylestergruppen ausmachen.

21. Härtbare Zusammensetzung nach Anspruch 18 oder 19, wobei die Verbindung mit einer Methylestergruppe ein Copolymer ist, das ein Monomer mit einer Methylestergruppe als Bestandteil enthält, und wobei unter Estergruppen, die in den Monomeren enthalten sind, die verschieden von dem Monomer mit einer Methylestergruppe, jene mit einer Alkoxygruppe, die primär ist und zwei bis vier Kohlenstoffatome enthält, 400% oder weniger bei einem Molverhältnis bezüglich der Methylestergruppen ausmachen.

22. Härtbare Zusammensetzung nach einem der Ansprüche 1 bis 21, wobei die härtbare Zusammensetzung eine härtbare Einkomponentenzusammensetzung ist.

23. Härtbare Zusammensetzung nach einem der Ansprüche 1 bis 22, welche einen Kondensationshärtungskatalysator als einen wesentlichen Bestandteil umfaßt.

24. Härtbare Zusammensetzung nach Anspruch 23, wobei der Kondensationshärtungskatalysator ein Zinnhärtungskatalysator ist.

25. Härtbare Zusammensetzung nach einem der Ansprüche 1 bis 24, wobei das Aminosilan (III) ein Silankopplungsmittel ist.

26. Härtbare Zusammensetzung nach einem der Ansprüche 1 bis 25, weiterhin ein Polyetherpolymer mit wenigstens einer vernetzbaren Silylgruppe umfassend, wobei die vernetzbare Silylgruppe dargestellt ist durch die allgemeine Formel (1) wie in Anspruch 1 definiert.

27. Dichtmittel, wobei die härtbare Zusammensetzung nach einem der Ansprüche 1 bis 26 verwendet ist.

28. Flüssigdichtung, wobei die härtbare Zusammensetzung nach einem der Ansprüche 1 bis 26 verwendet ist.

29. Klebstoff, wobei die härtbare Zusammensetzung nach einem der Ansprüche 1 bis 26 verwendet ist.

## Revendications

1. Composition durcissable qui comprend les deux constituants suivants comme constituants essentiels :
(I) un polymère vinylique, lequel présente au moins un groupe silyle réticulable représenté par la formule générale (I) à la terminaison:
-[Si(R¹ )_{2-b}(Y)_{b}O]ₘ-Si(R²)₃₋ₐ(Y)ₐ (1)
dans laquelle chacun de R¹ et R² représente un groupe alkyle contenant de 1 à 20 atomes de carbone, un groupe aryle contenant de 6 à 20 atomes de carbone, un groupe aralkyle contenant de 7 à 20 atomes de carbone, ou un groupe triorganosiloxy représenté par (R')₃SiO-, où R' représente un groupe hydrocarboné monovalent contenant de 1 à 20 atomes de carbone, et les trois R peuvent être identiques ou différents les uns des autres, et lorsque deux ou plusieurs R¹ ou R² existent, ceux-ci peuvent être identiques ou différents les uns des autres ; Y représente un groupe hydroxyle ou un groupe hydrolysable, et lorsque deux ou plusieurs Y existent, ceux-ci peuvent être identiques ou différents les uns des autres ; et a représente 0, 1, 2 ou 3, b représente 0, 1 ou 2, et m représente un nombre entier de 0 à 19, lequel satisfait a + mb≥1 ; et
(III) un aminosilane,
dans laquelle:
- ledit polymère vinylique (I) présente un monomère contenant un groupe d'ester méthylique comme une unité de constituant essentiel; ou
- ladite composition durcissable comprend de plus un composé (II) présentant un groupe d'ester méthylique, dans laquelle ledit composé (II) n'est pas identique au polymère vinylique (1).

2. Composition durcissable selon la revendication 1, dans laquelle le groupe amino contenu dans l'aminosilane (III) est une amine primaire.

3. Composition durcissable selon la revendication 1 ou 2, laquelle comprend les deux constituants suivants comme constituants essentiels:
- un polymère vinylique (I), lequel présente au moins un groupe silyle réticulable de la formule générale (I) comme défini dans la revendication 1 à la terminaison et un monomère contenant un groupe d'ester méthylique comme une unité de constituant essentiel ; et
- (III) un aminosilane.

4. Composition durcissable selon la revendication 3, dans laquelle le polymère vinylique (I) est un polymère (méth)acrylique.

5. Composition durcissable selon la revendication 3 ou 4, dans laquelle le monomère contenant un groupe d'ester méthylique qui constitue le polymère vinylique (I) est l'acrylate de méthyle.

6. Composition durcissable selon la revendication 3 ou 4, dans laquelle le monomère contenant un groupe d'ester méthylique qui constitue le polymère vinylique (I) est le méthacrylate de méthyle.

7. Composition durcissable selon l'une quelconque des revendications 1 à 6, dans laquelle le polymère vinylique (I) est dans un état liquide à 23°C.

8. Composition durcissable selon l'une quelconque des revendications 1 à 7, dans laquelle le polymère vinylique (I) est synthétisé par une polymérisation radicalaire vivante.

9. Composition durcissable selon l'une quelconque des revendications 1 à 9, dans laquelle le polymère vinylique (I) est synthétisé par une polymérisation radicalaire par transfert d'atome.

10. Composition durcissable selon l'une quelconque des revendications 1 à 9, dans laquelle le polymère vinylique (I) présente un rapport de masse moléculaire moyenne en masse à masse moléculaire moyenne en nombre inférieur à 1,8, le rapport étant déterminé par chromatographie par perméation sur gel.

11. Composition durcissable selon la revendication 1, laquelle comprend les constituants suivants comme constituants essentiels :
- un polymère vinylique (1) présentant au moins un groupe silyle réticulable représenté par la formule générale (I) comme défini dans la revendication 1 à la terminaison ;
- un composé (II) présentant un groupe d'ester méthylique, dans lequel le composé (II) présentant un groupe d'ester méthylique n'est pas identique au polymère vinylique (1) ; et
- un aminosilane (III).

12. Composition durcissable selon la revendication 11, dans laquelle le polymère vinylique (I) est un polymère acrylique.

13. Composition durcissable selon la revendication 12, dans laquelle le polymère vinylique (I) est un polymère d'ester acrylique.

14. Composition durcissable selon l'une quelconque des revendications 11 à 13, dans laquelle le composé (II) présentant un groupe d'ester méthylique n'est pas un polymère.

15. Composition durcissable selon l'une quelconque des revendications 11 à 14, dans laquelle l'atome de carbone à la position α du groupe d'ester méthylique contenu dans le composé (II) présentant un groupe méthylique, et lequel n'est pas identique au polymère vinylique (I), est primaire ou secondaire.

16. Composition durcissable selon les revendications 11 à 15, dans laquelle le composé (II) présentant un groupe d'ester méthylique, et lequel n'est pas identique au polymère vinylique (I), est un ester diméthylique d'un acide dicarboxylique.

17. Composition durcissable selon l'une quelconque des revendications 11 à 16, dans laquelle le composé (II) présentant un groupe d'ester méthylique est choisi dans le groupe constitué par :
- le malonate de diméthyle, le succinate de diméthyle, le glutarate de diméthyle, l'adipate de diméthyle, le sébaçate de diméthyle, l'acétate de méthyle, le propionate de méthyle, le butyrate de méthyle, le valérate de méthyle, le caprylate de méthyle, le caprate de méthyle, le laurate de méthyle, le myristate de méthyle, le palmitate de méthyle, le stéarate de méthyle, l'oléate de méthyle, le ricinoléate de méthyle, et l'ester méthylique d'acide gras de noix de coco.

18. Composition durcissable selon l'une quelconque des revendications 11 à 17, dans laquelle le composé (II) présentant un groupe d'ester méthylique, et lequel n'est pas identique au polymère vinylique (1), est un polymère contenant un monomère présentant un groupe d'ester méthylique comme une unité de constituant.

19. Composition durcissable selon la revendication 18, dans laquelle le monomère présentant un groupe d'ester méthylique est l'acrylate de méthyle.

20. Composition durcissable selon la revendication 18 ou 19, dans laquelle le composé présentant un groupe d'ester méthylique est un copolymère contenant un monomère présentant un groupe d'ester méthylique comme un constituant, et celui parmi les groupes d'ester contenus dans des monomères différents du monomère présentant un groupe d'ester méthylique, ceux présentant un groupe alcoxy qui est primaire et qui contient 5 atomes de carbone ou plus constituent 80 % ou moins à un rapport molaire par rapport aux groupes d'ester méthylique.

21. Composition durcissable selon la revendication 18 ou 19, dans laquelle le composé présentant un groupe d'ester méthylique est un copolymère contenant un monomère présentant un groupe d'ester méthylique comme un constituant, et celui parmi les groupes d'ester contenus dans des monomères différents du monomère présentant un groupe d'ester méthylique, ceux présentant un groupe alcoxy qui est primaire et qui contient de 2 à 4 atomes de carbone constituent 400 % ou moins à un rapport molaire par rapport aux groupes d'ester méthylique.

22. Composition durcissable selon l'une quelconque des revendications 1 à 21, dans laquelle la composition durcissable est une composition durcissable monoconstituante.

23. Composition durcissable selon l'une quelconque des revendications 1 à 22, laquelle comprend un catalyseur de durcissement par condensation comme un constituant essentiel.

24. Composition durcissable selon la revendication 23, dans laquelle le catalyseur de durcissement par condensation est un catalyseur de durcissement d'étain.

25. Composition durcissable selon l'une quelconque des revendications 1 à 24, dans laquelle l'aminosilane (III) est un agent de couplage de silane.

26. Composition durcissable selon l'une quelconque des revendications 1 à 25, comprenant de plus un polymère de polyéther présentant au moins un groupe silyle réticulable, le groupe silyle réticulable étant représenté par la formule générale (I) comme définie dans la revendication 1.

27. Matériau d'étanchéité, dans lequel on utilise la composition durcissable selon l'une quelconque des revendications 1 à 26.

28. joint d'étanchéité liquide, dans lequel on utilise la composition durcissable selon l'une quelconque des revendications 1 à 26.

29. Adhésif, dans lequel on utilise la composition durcissable selon l'une quelconque des revendications 1 à 26.
